# EUROPEAN PATENT APPLICATION

(11) **EP 4 675 427 A1**
(43) Date of publication of application: **07.01.2026**
(21) Application number: 23953830.9
(22) Date of filing: 28.09.2023
(51) Int. Cl.: G06F 9/445, G06F 9/48, G06F 9/50

(54) **APPLICATION STARTING METHOD AND ELECTRONIC DEVICE**

(71) Applicant: Honor Device Co., Ltd., Shenzhen, Guangdong 518040 (CN)
(72) Inventor: XIAO, Jun, Shenzhen, Guangdong 518040 (CN)
(74) Representative: Gill Jennings & Every LLP
(86) International application number: PCT/CN2023/122998
(87) International publication number: WO 2025/065686

(57) **Abstract**

This application provides an application launching method and an electronic device, and relates to the field of terminal technologies. After receiving a launch operation performed by a user on a first application, an electronic device launches the first application in response to the launch operation. During launching of the first application, the electronic device may use a sensitivity curve corresponding to the first application to determine a target occupancy corresponding to the first application, where the sensitivity curve corresponding to the first application identifies a mapping relationship between an occupancy of an L3 cache attributable to the first application and an IPC of the first application, and the target occupancy represents a minimum occupancy of the L3 cache that corresponds to a highest IPC. Then, the first application may allocate the L3 cache of a corresponding size to the first application based on the target occupancy, so as to continue launching the first application based on the L3 cache allocated to the first application, thereby ensuring a sufficiently high occupancy of the L3 cache attributable to the first application, and shortening launch duration of the first application.

## Description

### TECHNICAL FIELD

This application relates to the field of terminal technologies, and in particular, to an application launching method and an electronic device.

### BACKGROUND

With development of electronic devices, increasingly diversified applications (application) are installed on electronic devices. When a user needs to use an application (such as application A) on an electronic device, the user needs to first trigger the electronic device to launch application A. However, when the electronic device launches application A, if the electronic device is also running another application (for example, a background application), running of the background application may affect a launch time of a foreground application (namely, application A), resulting in a relatively long launch time of the foreground application. This causes the user to wait for a relatively long time for the application to launch, and leads to poor user experience.

### SUMMARY

In view of this, this application provides an application launching method and an electronic device, to avoid an excessively long launch time of an application and avoid an excessively long waiting time of a user.

According to a first aspect, this application provides an application launching method, applied to an electronic device including a shared cache. After the electronic device receives a first operation (or referred to as a launch operation) specific to a first application, it indicates that the first application needs to be launched, and storage space in the shared cache may be allocated to the first application. The first application is an application of a preset type.

Then, the electronic device may access target storage space to obtain launch data of the first application. Then, the electronic device may launch the first application based on the launch data of the first application.

After the electronic device receives a first operation specific to a second application, it indicates that the second application needs to be launched. The electronic device does not allocate a fixed shared cache to the second application, but accesses the shared cache to obtain launch data of the second application.

Then, the electronic device launches the second application based on the launch data of the second application.

In this application, for an application (for example, the first application) of a specific type (that is, the preset type), when the first application needs to be launched, the electronic device may allocate a shared cache of a fixed size to the first application, so that the first application does not need to preempt a shared cache, that is, does not need to contend for a shared cache with another application running on the electronic device, thereby reducing impact of another application on the launch of the first application. In this way, an excessively long launch time of the first application can be avoided, and further a relatively long waiting time of a user can be avoided, thereby ensuring user experience. However, for an application (for example, the second application) of a non-specific type, the electronic device can normally launch the second application without allocating a shared cache of a fixed size to the first application.

In a possible design manner, "an application of the preset type" indicates that when an occupancy of the shared cache attributable to the application is a first occupancy, a launch time of the application is a first time. When an occupancy of the shared cache attributable to the application is a second occupancy, a launch time of the application is a second time. The first occupancy is different from the second occupancy, and the first time is different from the second time.

Optionally, both the first occupancy and the second occupancy are within a preset occupancy range. Different occupancies in the preset occupancy range correspond to different launch times.

In a possible design manner, the electronic device may determine, by using a white list, whether the first application is an application of the preset type. A preset white list includes an identifier of at least one application, and each of the at least one application is an application of the preset type. When the preset white list includes an identifier of the first application, the electronic device can determine that the first application is an application of the preset type. When the preset white list does not include an identifier of the first application, the electronic device can determine that the first application is not an application of the preset type.

Optionally, the electronic device may periodically maintain the preset white list, and update the identifier of the application in the preset white list.

Alternatively, the electronic device may determine, based on whether a preset mark exists for the first application, whether the first application is an application of the preset type. If the corresponding preset mark exists for the first application, the electronic device can determine that the first application is an application of the preset type. If the corresponding preset mark does not exist for the first application, the electronic device can determine that the first application is not an application of the preset type.

In this application, the electronic device quickly determines a type of the first application by using the preset white list or based on whether the preset mark exists for the first application.

In a possible design manner, the first application may be a short video application or a question-and-answer application.

In a possible design manner, a launch process of the second application may include:

The electronic device preempts storage space corresponding to the second application from the shared cache, that is, the second application needs to contend for the shared cache with another application running on the electronic device other than the second application.

Then, the electronic device accesses the storage space corresponding to the second application to obtain the launch data of the second application.

In a possible design manner, the launching the first application may include:

The electronic device displays a launch interface of the first application in a full-screen manner, or displays the launch interface of the first application in a floating manner, or the electronic device displays the launch interface of the first application in a split-screen manner.

According to a second aspect, this application provides an application launching method, applied to an electronic device including a shared cache. After the electronic device receives a first operation specific to a first application, it indicates that the first application needs to be launched, and storage space in the shared cache may be allocated to the first application based on a mapping relationship corresponding to the first application. The mapping relationship corresponding to the first application represents a mapping relationship between an occupancy of the shared cache attributable to the first application and a launch time of the first application, and the first application is an application of the preset type.

Then, the electronic device may access the storage space storage space allocated to the first application to obtain launch data of the first application, and launch the first application based on the launch data of the first application.

In this application, for an application (for example, the first application) of a specific type (that is, the preset type), when the first application needs to be launched, the electronic device may flexibly allocate a shared cache of a fixed size to the first application based on the mapping relationship between the occupancy of the shared cache attributable to the first application and the launch time of the first application, so that the first application does not need to preempt a shared cache, that is, does not need to contend for a shared cache with another application running on the electronic device, thereby reducing impact of another application on the launch of the first application and shortening the launch time of the first application. In this way, an excessively long launch time of the first application can be avoided, and further a relatively long waiting time of a user can be avoided, thereby ensuring user experience.

In a possible design manner, a process in which the electronic device allocates the storage space to the first application based on the mapping relationship corresponding to the first application may include:

The electronic device may determine a target occupancy corresponding to the first application based on the mapping relationship corresponding to the first application, where the target occupancy represents an occupancy of the shared cache attributable to the first application in a case that the launch time of the first application is shortest. Then, the electronic device may allocate target storage space in the shared cache to the first application based on the target occupancy, that is, allocate a shared cache of a fixed size to the first application based on the target occupancy.

In this application, the electronic device allocates, to the first application by using the mapping relationship corresponding to the first application, a shared cache corresponding to the occupancy in the case that the launch time of the first application is shortest, to ensure that the occupancy of the shared cache attributable to the first application meets a launch requirement of the first application, so that the launch time of the first application is shortest, thereby avoiding a relatively long waiting time of a user and ensuring user experience.

In a possible design manner, "an application of the preset type" indicates that a launch time of the application is related to an occupancy of the shared cache attributable to the application.

In a possible design manner, a process of detecting a type of the first application may include:

The electronic device may allocate storage space of corresponding sizes in the shared cache to the first application based on different occupancies, where different occupancies correspond to storage space of different sizes. Then, the electronic device determines, based on launch performance values of the first application that respectively correspond to storage space of different sizes, that the first application is an application of the preset type, thereby implementing accurate determining of the type of the first application.

In a possible design manner, a process of allocating storage space of a corresponding size in the shared cache to the first application based on the occupancy may include:

For each first preset occupancy, the electronic device may allocate first storage space in the shared cache to the first application based on the first preset occupancy. Correspondingly, a process of determining, based on launch performance values of the first application that respectively correspond to storage space of different sizes, that the first application is an application of the preset type may include:
obtaining a launch performance value corresponding to the first preset occupancy, where the launch performance value corresponding to the first preset occupancy represents a launch performance value of the first application in a case that the storage space in the shared cache for the first application is the first storage space corresponding to the first preset occupancy; and determining a difference between launch performance values corresponding to different first preset occupancies; and
when the difference is greater than a first preset difference, determining that the first application is an application of the preset type.

In addition, when the difference each is less than or equal to the first preset difference, it is determined that the first application is an application of a non-preset type.

In a possible design manner, the electronic device may determine, by using a white list, whether the first application is an application of the preset type. A preset white list includes an identifier of at least one application, and each of the at least one application is an application of the preset type. When the preset white list includes an identifier of the first application, the electronic device can determine that the first application is an application of the preset type. When the preset white list does not include an identifier of the first application, the electronic device can determine that the first application is not an application of the preset type, that is, determine that the first application is an application of the non-preset type.

Optionally, the electronic device may periodically maintain the preset white list, and update the identifier of the application in the preset white list.

Alternatively, the electronic device may determine, based on whether a preset mark exists for the first application, whether the first application is an application of the preset type. If the corresponding preset mark exists for the first application, the electronic device can determine that the first application is an application of the preset type. If the corresponding preset mark does not exist for the first application, the electronic device can determine that the first application is not an application of the preset type.

In this application, the electronic device quickly determines a type of the first application by using the preset white list or based on whether the preset mark exists for the first application.

In a possible design manner, the mapping relationship corresponding to the first application represents a mapping relationship between the occupancy of the shared cache attributable to the first application and the launch performance value of the first application; and a higher launch performance value of the first application indicates a shorter launch time of the first application.

A process of determining the mapping relationship corresponding to the first application may include:

The electronic device may allocate storage space of different sizes in the shared cache to the first application based on different occupancies. The mapping relationship corresponding to the first application is determined based on the storage space of different sizes and the launch performance values of the first application that respectively correspond to the storage space of different sizes, so as to accurately determine the mapping relationship between the occupancy of the shared cache attributable to the first application and the launch time of the first application, thereby ensuring accuracy of the determined target occupancy.

In a possible design manner, the mapping relationship corresponding to the first application may be a mapping curve. Correspondingly, a process of determining the mapping curve corresponding to the first application may include:

For each second preset occupancy, the electronic device may allocate second storage space in the shared cache to the first application based on the second preset occupancy.

Then, the electronic device may obtain a launch performance value corresponding to the second preset occupancy, where the launch performance value corresponding to the second preset occupancy represents a launch performance value of the first application in a case that the storage space in the shared cache for the first application is the second storage space corresponding to the second preset occupancy.

Then, the electronic device may determine the mapping relationship based on each second preset occupancy and a launch performance value corresponding to each second preset occupancy, so as to accurately determine the mapping relationship between the occupancy of the shared cache attributable to the first application and the launch performance value of the first application, that is, the launch time.

In a possible design manner, the target occupancy represents a minimum occupancy of the shared cache attributable to the first application in a case that the launch time is shortest.

In a possible design manner, the shared cache includes a plurality of partitions. A process of allocating target storage space in the shared cache to the first application based on the target occupancy may include:

The electronic device may set flag bits of a target register based on the target occupancy to allocate a corresponding quantity of partitions in the shared cache to the first application, so as to allocate fixed storage space to the first application.

In a possible design manner, the target register includes a flag bit corresponding to each of the plurality of partitions. When a flag bit corresponding to a partition is set to a first identifier, it indicates that the partition is not allocated to the first application, or when a flag bit corresponding to a partition is set to a second identifier, it indicates that the partition is allocated to the first application.

In a possible design manner, the launch performance value includes an instructions per cycle IPC or a hit rate. A higher IPC indicates a shorter launch time of the first application.

The hit rate (or referred to as a shared cache hit rate) is used to indicate a probability of accessing the launch data of the first application in the shared cache, and a higher hit rate indicates a shorter launch time of the first application.

In a possible design manner, the shared cache may include an L3 cache.

In a possible design manner, the electronic device receives a first operation specific to a second application, that is, a launch operation.

When the second application is an application of the non-preset type, the electronic device may access the shared cache to obtain launch data of the second application. Another application running on the electronic device other than the second application contends with the second application for access to the shared cache. "An application of the non-preset type" indicates that a launch time of the application is independent of an occupancy of the shared cache attributable to the application.

The electronic device launches the second application based on the launch data of the second application.

In this application, for an application of the non-preset type (for example, the second application), because a launch time of the second application is independent of an occupancy of the shared cache attributable to the second application, the electronic device normally launches the second application, and does not need to allocate a fixed shared cache to the second application. The second application needs to contend for the shared cache with another application, that is, the electronic device needs to preempt storage space corresponding to the second application from the shared cache, thereby avoiding unnecessary allocation of the shared cache.

According to a third aspect, this application provides an electronic device. The electronic device includes a display, a memory, and one or more processors. The display and the memory are coupled to the processor. The display is configured to display an image generated by the processor. The memory is configured to store computer program code, and the computer program code includes computer instructions. When the processor executes the computer instructions, the electronic device is enabled to perform the method according to any one of the design manners of the first aspect.

According to a fourth aspect, this application provides an electronic device. The electronic device includes a display, a memory, and one or more processors. The display and the memory are coupled to the processor. The display is configured to display an image generated by the processor. The memory is configured to store computer program code, and the computer program code includes computer instructions. When the processor executes the computer instructions, the electronic device is enabled to perform the method according to any one of the design manners of the second aspect.

According to a fifth aspect, this application provides a computer-readable storage medium, including computer instructions. When the computer instructions are run on an electronic device, the electronic device is enabled to perform the method according to any one of the design manners of the first aspect.

According to a sixth aspect, this application provides a computer-readable storage medium, including computer instructions. When the computer instructions are run on an electronic device, the electronic device is enabled to perform the method according to any one of the design manners of the second aspect.

According to a seventh aspect, this application provides a computer program product. When the computer program product runs on an electronic device, the electronic device is enabled to perform the method according to any one of the design manners of the first aspect.

According to an eighth aspect, this application provides a computer program product. When the computer program product runs on an electronic device, the electronic device is enabled to perform the method according to any one of the design manners of the second aspect.

It can be understood that for beneficial effects that can be achieved by the electronic device described in the third aspect and the fourth aspect, the computer-readable storage medium described in the fifth aspect and the sixth aspect, and the computer program product described in the seventh aspect and the eighth aspect, refer to the beneficial effects in the first aspect, the second aspect, and any one of the possible design manners thereof, and details are not described herein again.

### BRIEF DESCRIPTION OF DRAWINGS

FIG. 1A is a schematic diagram 1 of an interface of launching a game application according to an embodiment of this application;
FIG. 1B is a schematic diagram 2 of an interface of launching a game application according to an embodiment of this application;
FIG. 1C is a schematic diagram 3 of an interface of launching a game application according to an embodiment of this application;
FIG. 1D is a schematic diagram 4 of an interface of launching a game application according to an embodiment of this application;
FIG. 1E is a schematic diagram of an interface of a background application according to an embodiment of this application;
FIG. 2 is a schematic diagram of a hardware structure of an electronic device according to an embodiment of this application;
FIG. 3 is a block diagram of a software structure of an electronic device according to an embodiment of this application;
FIG. 4 is a schematic flowchart 1 of an application launching method according to an embodiment of this application;
FIG. 5A is a schematic diagram 1 of a mapping curve according to an embodiment of this application;
FIG. 5B is a schematic diagram 2 of a mapping curve according to an embodiment of this application;
FIG. 5C is a schematic diagram 3 of a mapping curve according to an embodiment of this application;
FIG. 5D is a schematic diagram 4 of a mapping curve according to an embodiment of this application;
FIG. 6A is a schematic diagram of a split-screen interface according to an embodiment of this application;
FIG. 6B is a schematic diagram of allocating an L3 cache according to an embodiment of this application;
FIG. 6C is a schematic diagram of sharing an L3 cache by applications according to an embodiment of this application;
FIG. 7A and FIG. 7B are a schematic flowchart 2 of an application launching method according to an embodiment of this application;
FIG. 8 is a schematic diagram of a structure of an L3 cache according to an embodiment of this application;
FIG. 9 is a schematic flowchart 3 of an application launching method according to an embodiment of this application;
FIG. 10A is a schematic diagram 1 of a multi-window interface according to an embodiment of this application;
FIG. 10B is a schematic diagram 2 of a multi-window interface according to an embodiment of this application;
FIG. 10C is a schematic diagram 3 of a multi-window interface according to an embodiment of this application; and
FIG. 10D is a schematic diagram of a single-window interface according to an embodiment of this application.

### DESCRIPTION OF EMBODIMENTS

In the following descriptions, the terms "first" and "second" are used only for the purpose of description, and shall not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

The following first describes the nouns in this application.

Central processing unit (central processing unit, CPU) core (cores): The CPU core is a physical or logical processing unit of a CPU. One CPU may include one or more CPU cores, and each CPU core may independently execute an instruction and process data.

L3 cache (cache): The L3 cache is a shared cache, and all CPU cores can access data in the L3 cache. When a CPU core needs to access data, the CPU core may first query whether the data required by the CPU core exists in an L1 cache. Then, if the data required by the CPU core does not exist in the L1 cache, the CPU continues to query whether the required data exists in an L2 cache. Then, if the data required by the CPU core does not exist in the L2 cache, the CPU core continues to query whether the required data exists in an L3 cache. A case that the data required by the CPU core exists may be referred to as an L3 cache hit (cache hit), or otherwise may be referred to as a cache miss (cache miss). The CPU core needs to load data from a main memory (or referred to as a random access memory (random access memory, RAM)). Both the L1 cache and the L2 cache are caches used by a CPU to accelerate data access.

The foregoing describes the nouns in this application, and the following starts to describe the technical solutions of this application.

When an electronic device (for example, a mobile phone) launches an application on the mobile phone, if the mobile phone is also running another application (for example, a background application), and a foreground application (including the launched application) and the background application run concurrently, the foreground application and the background application may contend for a shared resource. For example, the shared resource includes an L3 cache. Because the foreground application and the background application contend for the L3 cache at the same time, an occupancy of the L3 cache attributable to the foreground application is uncertain. When the occupancy of the L3 cache attributable to the foreground application is relatively small, a success rate of access by the mobile phone from the L3 cache to data required for launching the foreground application (that is, launch data of the foreground application) is low, in other words, an L3 cache hit rate is low (or described as follows: an L3 cache hit rate of the foreground application is low). The mobile phone needs to access the data required for launching the foreground application from a main memory. However, a speed of accessing the main memory by the mobile phone is lower than a speed of accessing a cache (for example, the L3 cache) by the mobile phone, and consequently a speed of accessing the data by the mobile phone is reduced. As a result, a time required by the mobile phone to launch the foreground application is relatively long, duration of waiting for the application to launch is increased, and user experience is low. In addition, as an occupancy of the L3 cache attributable to an application at each launch is unfixed, a time of each launch of the application is unfixed and fluctuating.

It should be noted that the occupancy of the L3 cache attributable to the application (for example, the foreground application) described above may be understood as a size of the L3 cache allowed to be accessed only by the application, that is, a size of the L3 cache that the mobile phone can access when launching or running the application. When the occupancy of the L3 cache attributable to the foreground application is relatively small, the size of the L3 cache that the mobile phone can access when launching the foreground application is relatively small. As a result, a probability that the mobile phone can successfully access the launch data of the foreground application from the L3 cache is relatively small, resulting in a relatively low L3 cache hit rate. In addition, a probability that the mobile phone needs to access the launch data of the foreground application from the main memory is relatively high, reducing a speed of accessing the launch data of the foreground application by the mobile phone.

For example, because different CPU cores in the mobile phone all can access the L3 cache, when one CPU core (for example, CPU core 1) launches an application (for example, application A), another CPU core may be running a background application. Therefore, CPU core 1 and the another CPU core both access the L3 cache. As an occupancy of the L3 cache attributable to application A and that attributable to the background application are uncertain, when the occupancy of the L3 cache attributable to application A is relatively small, an L3 cache hit rate of application A is relatively low. Consequently, the CPU core needs to read, from the main memory for a plurality of times, data required for launching application A, and therefore CPU core 1 requires a relatively long time to complete a launch of application A. In addition, as an occupancy of the L3 cache attributable to application A at each launch is uncertain, a time required for completing a launch of application A by the CPU core in the mobile phone is fluctuating. As a result, a user may be confused about why application A is sometimes launched faster and sometimes launched slower, and user experience is affected.

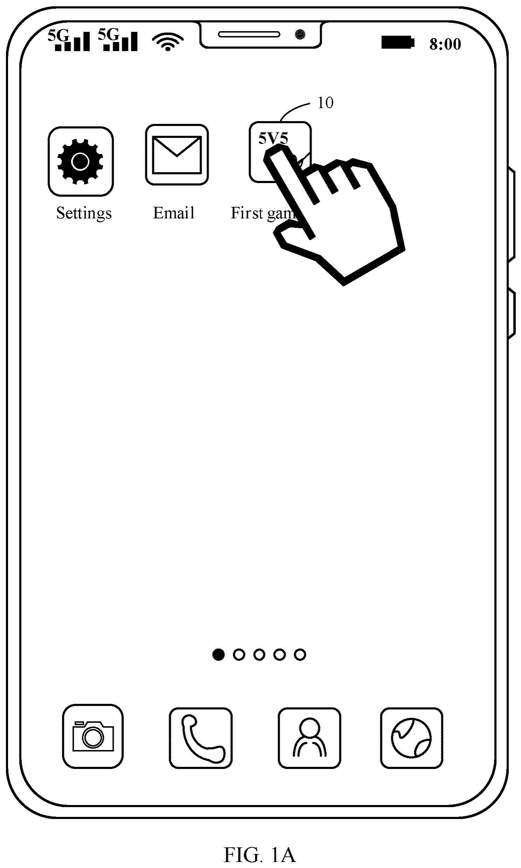

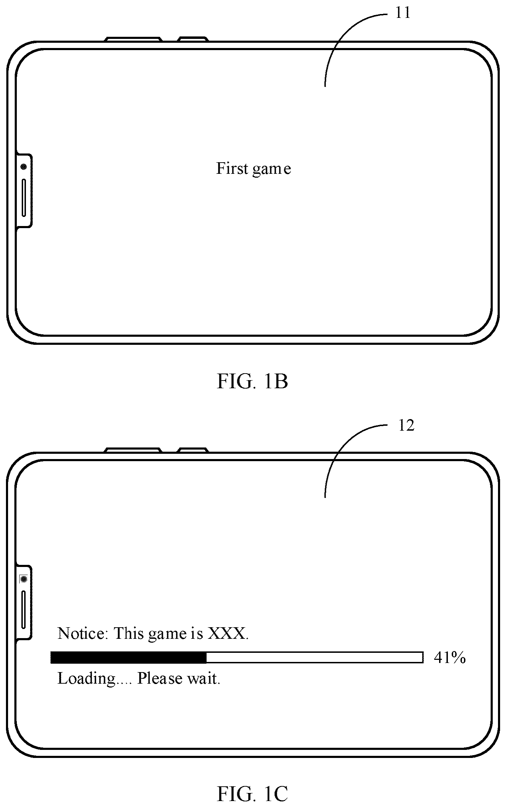

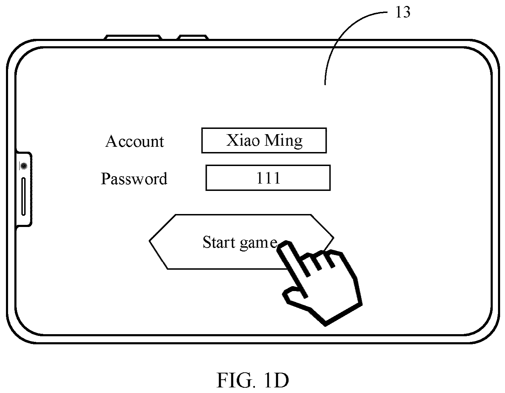

For example, as shown in FIG. 1A, a user taps an icon 10 of a first game application on a desktop of a mobile phone. The mobile phone launches the first game application in response to the tap operation on the icon 10 of the first game application. In a process of launching the first game application, the mobile phone needs to first load launch content. As shown in FIG. 1B, the mobile phone may first display a launch animation 11, and then display a loading interface 12 (as shown in FIG. 1C). Neither the launch animation nor the loading interface provides any control for operation by the user. After the launch content (or referred to as a launch interface) is fully loaded, the mobile phone displays an initial operable interface 13 shown in FIG. 1D. The initial operable interface 13 is the first interface that is displayed when the first game application is loaded and that provides a control (for example, a game starting button) operable by the user. In this case, the first game application is fully launched.

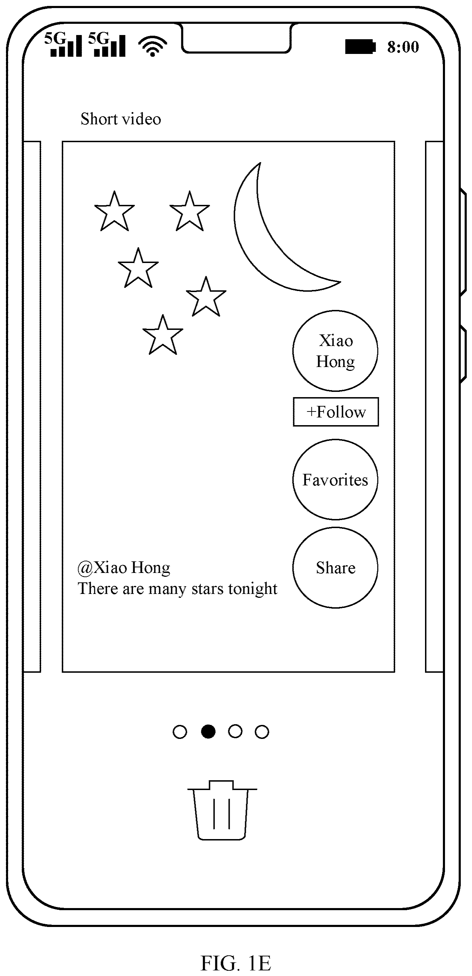

However, during launching of the first game application, the mobile phone is also running a background application (as shown in FIG. 1E, the background application of the mobile phone includes a short video application). Because an L3 cache includes data required for launching and running an application, the mobile phone needs to access the L3 cache for both launching the first game application and running the background application. As a result, the first game application and the background application preempt the L3 cache, and a launch time of the first game application may be prolonged.

Therefore, for the foregoing problem, this application proposes an application launching method. Considering that a processor (for example, an ARM processor) supports MPAM hardware characteristics, and the hardware characteristics allow an L3 cache of a specified size (that is, a specified partition of the L3 cache) to be allocated to a specified application, that is, restrict an occupancy of the L3 cache attributable to another application, an electronic device may allocate the L3 cache of the specified size to a foreground application in a launching state, so that an occupancy of the L3 cache attributable to the foreground application at each launch is stable. In this way, a fluctuation degree of a launch time of the foreground application can be reduced, and a relatively long launch time of the foreground application caused by a relatively small occupancy of the L3 cache attributable to the foreground application can be avoided. Specifically, when the foreground application is in a launch scenario, the electronic device may obtain a mapping relationship between a launch performance value of the foreground application and the occupancy of the L3 cache attributable to the foreground application. The launch performance value represents launch duration of the foreground application. For example, the launch performance value is an IPC. A higher IPC indicates a shorter launch time of the foreground application, and a lower IPC indicates a longer launch time of the foreground application. Then, the electronic device may determine, based on the mapping relationship, a minimum occupancy of the L3 cache attributable to the foreground application in a case that the launch performance value is largest, and use the minimum occupancy as a target occupancy, so as to determine a partition of the L3 cache that needs to be exclusively occupied by the foreground application. Then, the electronic device may set a target register in the processor based on the target occupancy, and allocate the L3 cache to the foreground application, so that the occupancy of the L3 cache attributable to the foreground application can be the target occupancy.

As the target occupancy of the L3 cache attributable to the foreground application during launching is the minimum occupancy of the L3 cache attributable to the foreground application in a case that the launch performance value is largest, that is, is the minimum occupancy in a case that the launch time of the foreground application is shortest, the launch time of the foreground application can be shortened, an excessively long launch time of the foreground application can be avoided, and allocation of an excessively large L3 cache to the foreground applications can be avoided. In addition, as an L3 cache of a specified size is allocated to the foreground application during each launch of the foreground application, stability of the occupancy of the L3 cache attributable to the foreground application is ensured. In this way, a fluctuation degree of the launch time of the foreground application can be reduced, a user is prevented from becoming confused about why the launch time of the foreground application is sometimes excessively long and sometimes very short, and user experience is ensured.

For example, the electronic device in the embodiments of this application may be a device capable of installing an application, such as a mobile phone, a tablet computer, a wearable device (for example, a smartwatch), a personal digital assistant (personal digital assistant, PDA), a notebook computer, a desktop computer, a vehicle-mounted device, an Internet of things device, or the like. A specific form of the electronic device is not specifically limited in the embodiments of this application.

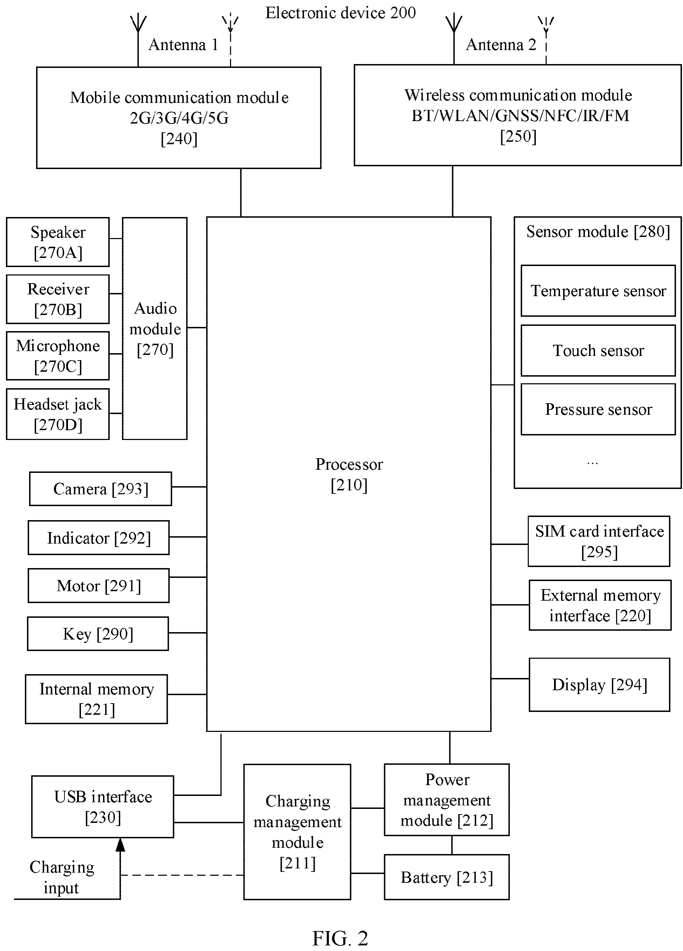

For example, FIG. 2 is a schematic diagram of a structure of an electronic device 200. As shown in FIG. 2, the electronic device 200 may include a processor 210, an external memory interface 220, an internal memory 221, a universal serial bus (universal serial bus, USB) interface 230, a charging management module 211, a power management module 212, a battery 213, an antenna 1, an antenna 2, a mobile communication module 240, a wireless communication module 250, an audio module 270, a speaker 270A, a receiver 270B, a microphone 270C, a headset jack 270D, a sensor module 280, a key 290, a motor 291, an indicator 292, a camera 293, a display 294, a subscriber identity module (subscriber identification module, SIM) card interface 295, and the like.

It can be understood that the structure shown in this embodiment of the present invention does not constitute a specific limitation on the electronic device 200. In some other embodiments of this application, the electronic device 200 may include more or fewer parts than those shown in the figure, some parts may be combined, some parts may be split, or there may be different part arrangements. The parts shown in the figure may be implemented by hardware, software, or a combination of software and hardware.

The processor 210 may include one or more processing units. For example, the processor 210 may include an application processor (application processor, AP), a modem processor, a GPU, an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 200. The controller may generate an operation control signal based on an instruction operation code and a time sequence signal, to complete control of instruction fetching and instruction execution.

A memory may be further disposed in the processor 210 to store instructions and data. In some embodiments, the memory in the processor 210 is a cache memory. The memory may store instructions or data recently used or cyclically used by the processor 210. If the processor 210 needs to use the instructions or the data again, the processor 210 may directly invoke the instructions or the data from the memory. This avoids repeated access and reduces a waiting time of the processor 210, thereby improving system efficiency.

In some embodiments, the processor 210 may include a CPU. The CPU may include at least one CPU core. For example, a quantity of CPU cores is 8.

Optionally, each of the at least one CPU core may include an L1 cache and an L2 cache. The foregoing L3 cache may be located on the processor, and all CPU cores may share the L3 cache.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment of the present invention is merely an example for description, and constitutes no limitation on the structure of the electronic device 200. In some other embodiments of this application, the electronic device 200 may alternatively use an interface connection manner different from that in the foregoing embodiment, or a combination of a plurality of interface connection manners.

The charging management module 211 is configured to receive a charging input from a charger. In some embodiments of wireless charging, the charging management module 211 may receive a wireless charging input by using a wireless charging coil of the electronic device 200. The charging management module 211 may further supply power to the electronic device by using the power management module 212 while charging the battery 213.

A wireless communication function of the electronic device 200 may be implemented by using the antenna 1, the antenna 2, the mobile communication module 240, the wireless communication module 250, the modem processor, the baseband processor, and the like.

The antenna 1 and the antenna 2 are configured to transmit and receive electromagnetic wave signals. Each antenna in the electronic device 200 may be configured to cover one or more communication bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 240 may provide a solution applied to the electronic device 200 for wireless communication including 2G/3G/4G/5G and the like. The mobile communication module 240 may include at least one filter, switch, power amplifier, low noise amplifier (low noise amplifier, LNA), and the like. The mobile communication module 240 may receive an electromagnetic wave through the antenna 1, perform processing such as filtering or amplification on the received electromagnetic wave, and transmit the electromagnetic wave to the modem processor for demodulation. The mobile communication module 240 may further amplify a signal modulated by the modem processor, and convert the signal into an electromagnetic wave through the antenna 1 for radiation. In some embodiments, at least some functional modules in the mobile communication module 240 may be disposed in the processor 210. In some embodiments, at least some functional modules in the mobile communication module 240 may be disposed in a same device as at least some modules in the processor 210.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent device. In some other embodiments, the modem processor may be independent of the processor 210, and the modem processor and the mobile communication module 240 or another functional module may be disposed in a same device.

The wireless communication module 250 may provide a solution for wireless communication that is applied to the electronic device 200 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 250 may be one or more devices integrating at least one communication processing module. The wireless communication module 250 receives an electromagnetic wave by using the antenna 2, performs frequency modulation and filtering processing on an electromagnetic wave signal, and sends a processed signal to the processor 210. The wireless communication module 250 may further receive a to-be-sent signal from the processor 210, perform frequency modulation and amplification on the to-be-sent signal, and convert the to-be-sent signal into an electromagnetic wave through the antenna 2 for radiation.

The electronic device 200 implements a display function by using the GPU, the display 294, the application processor, and the like. The GPU is a microprocessor for image processing and connects the display 294 and the application processor. The GPU is configured to perform mathematical and geometric computing for graphics rendering. The processor 210 may include one or more GPUs that execute program instructions to generate or change displayed information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, or a quantum dot light emitting diode (quantum dot light emitting diodes, QLED). In some embodiments, the electronic device 200 may include one or N displays 294, where N is a positive integer greater than 1.

The electronic device 200 can implement a photographing function by using the ISP, the camera 293, the video codec, the GPU, the display 294, the application processor, and the like.

The ISP is configured to process data fed back by the camera 293. In some embodiments, the electronic device 200 may include one or N cameras 293, where N is a positive integer greater than 1.

The digital signal processor is configured to process a digital signal, and can process another digital signal in addition to processing a digital image signal. For example, when the electronic device 200 selects a frequency, the digital signal processor is configured to perform Fourier transform or the like on frequency energy.

The video codec is configured to compress or decompress a digital video. The electronic device 200 can support one or more types of video codecs. Therefore, the electronic device 200 may play or record videos in a plurality of encoding formats such as moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent recognition of the electronic device 200, for example, image recognition, face recognition, speech recognition, and text understanding, can be implemented by using the NPU.

The external memory interface 220 may be configured to be connected to an external memory card, for example, a Micro SD card, to extend a storage capability of the electronic device 200.

The internal memory 221 may be configured to store computer-executable program code, and the executable program code includes instructions. The processor 210 implements various function applications and data processing of the electronic device 200 by running the instructions stored in the internal memory 221. The internal memory 221 may include a program storage area and a data storage area. The program storage area may store an operating system, an application required by at least one function (for example, a sound playing function or an image playing function), and the like. The data storage area may store data (for example, a sound and an address book) and the like created during use of the electronic device 200. In addition, the internal memory 221 may include a high-speed random access memory, and may further include a nonvolatile memory, for example, at least one magnetic disk storage device, a flash memory device, or a universal flash storage (universal flash storage, UFS).

The electronic device 200 may implement audio functions by using the audio module 270, the speaker 270A, the receiver 270B, the microphone 270C, the headset jack 270D, the application processor, and the like, for example, music playback and audio recording.

The key 290 includes a power-on/off key, a volume key, and the like. The key 290 may be a mechanical key, or may be a touch key.

The indicator 292 may be an indicator light, and may be configured to indicate a charging state, a power change, a message, a missed incoming call, a notification, and the like.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

A software system of the electronic device 200 may use a layered architecture, an event-driven architecture, a microkernel architecture, a microservice architecture, or a cloud architecture. In the embodiments of the present invention, an Android system with a layered architecture is used as an example to describe a software structure of the electronic device 200.

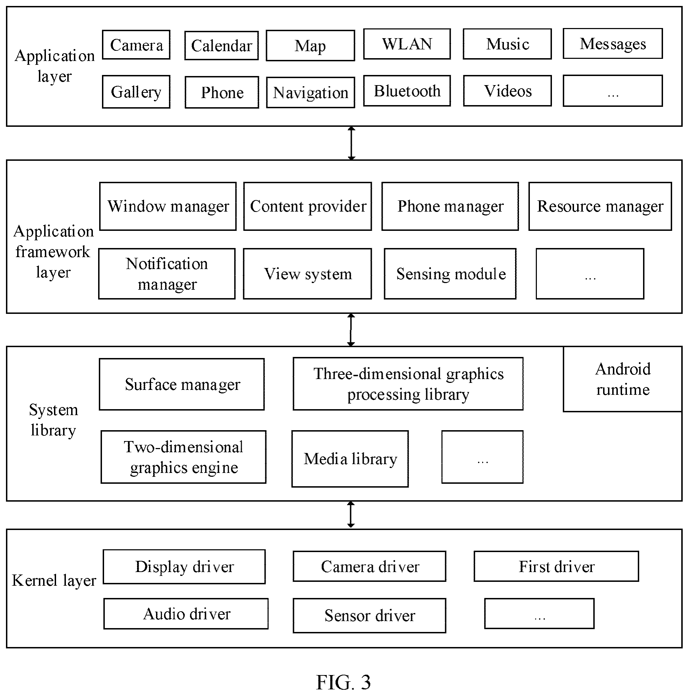

FIG. 3 is a block diagram of a software structure of an electronic device 200 according to an embodiment of the present invention.

In the layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for the applications at the application layer. The application framework layer includes some predefined functions.

As shown in FIG. 3, the application framework layer may include a window manager, a content provider, a view system, a phone manager, a resource manager, a sensing module, a notification manager, and the like.

The window manager is configured to manage a window program.

The content provider is configured to store and obtain data, and enable the data to be accessible to an application.

The view system includes visual controls such as a text display control and a picture display control.

The phone manager is configured to provide the electronic device 200 with a communication function.

The resource manager provides various resources for an application.

The notification manager enables the application to display notification information in a status bar, and may be configured to convey a notification-type message. The displayed notification information may automatically disappear after a short stay without user interaction.

The sensing module senses a status of a foreground application to determine whether the foreground application is in a launching stage. It should be understood that sensing the status of the foreground application by the sensing module is merely an example, or another module at the application framework layer may determine the status of the foreground application. This application sets no limitation thereto.

The Android runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The 2D graphics engine is a drawing engine for 2D graphics drawing.

The kernel layer is a layer between hardware and software. The kernel layer includes at least a display driver, a camera driver, an audio driver, a sensor driver, and a first driver,

In some embodiments, the kernel layer can determine, based on a type of the foreground application, whether to invoke the first driver (or referred to as a CPU driver) to allocate a fixed L3 cache to the foreground application.

It should be understood that a structure of the software layer described above is merely an example. In this application, the structure of the software layer is not limited, that is, the software layer may include one or more of the application layer, the application framework layer, the Android runtime, the system library, and the kernel layer, or the software layer may include another layer.

In the embodiments of this application, when a first application is in a launching stage, the electronic device may first determine a type of the first application. The type of the first application indicates whether a size of an occupancy of the L3 cache attributable to the first application affects a launch time of the first application. When the type of the first application is a sensitive type, it indicates that the size of the occupancy of the L3 cache attributable to the first application affects the launch time of the first application, and the electronic device may determine a degree of sensitivity of the first application to the occupancy of the L3 cache. Then, the electronic device may determine, based on the degree of sensitivity of the first application to the occupancy of the L3 cache, a size of the L3 cache that needs to be exclusively occupied by the foreground application, that is, a target occupancy, so as to accurately determine the size of the L3 cache to be allocated to the first application. Then, the electronic device may set a corresponding register by using the MPAM characteristics of the processor, so as to allocate the L3 cache of the corresponding size to the first application, thereby ensuring the occupancy of the L3 cache attributable to the first application, and avoiding an excessively long launch time of the first application.

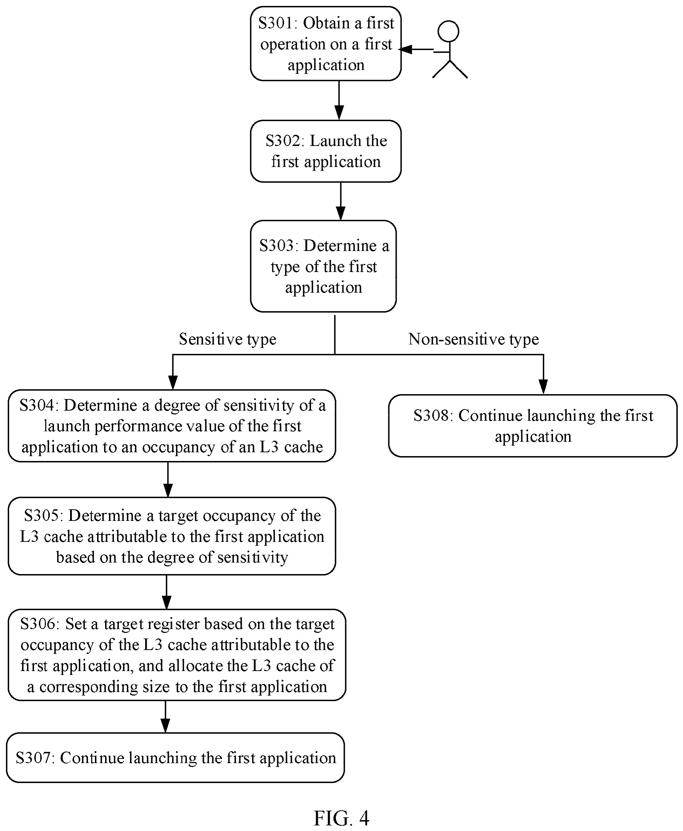

The following describes the application launching method in this application by using an example in which the foregoing electronic device is a mobile phone. As shown in FIG. 4, the resource scheduling method may include S301-S308.

S301: The mobile phone receives a first operation of a user on a first application.

S302: Launch the first application in response to the first operation.

The first operation is used to trigger the mobile phone to launch the first application, and the first application may be any application on the mobile phone. For example, the first operation may be an operation in which the user taps an icon of the first application that is displayed on a desktop of the mobile phone. If the first operation is an operation in which the user taps the icon 10 of the first game application shown in FIG. 1A, the first game application herein is the first application. In response to the first operation, the mobile phone needs to launch the first application to create a process corresponding to the first application. That is, a launch of the first application can be a cold launch.

In addition, the first operation may be another operation that can trigger the first application to launch. For example, the first operation is an operation in which the user taps an application in background applications displayed on the mobile phone. For example, the first operation is an operation in which the user taps an interface of the short video application shown in FIG. 1E. In response to the first operation, the mobile phone needs to re-launch the short video application, but does not need to create another process corresponding to the first application, that is, a launch of the first application can be a warm launch.

S303: During launching of the first application, the mobile phone determines a type of the first application. The type of the first application includes a sensitive type and a non-sensitive type.

"An application of the sensitive type" indicates that a launch time of the application is related to an occupancy of an L3 cache attributable to the application. In other words, if the type of the first application is the sensitive type, it indicates that a launch time of the first application is sensitive to the occupancy of the L3 cache, that is, it indicates that a size of the occupancy of the L3 cache attributable to the first application has relatively large impact on the launch time of the first application. When the occupancy of the L3 cache attributable to the first application is relatively large, the launch time of the first application is relatively short. When the occupancy of the L3 cache attributable to the first application is relatively small, the launch time of the first application is relatively long.

"An application of the non-sensitive type" indicates that a launch time of the application is independent of an occupancy of the L3 cache attributable to the application. In other words, if the type of the first application is the non-sensitive type, it indicates that the launch time of the first application is non-sensitive to the occupancy of the L3 cache, that is, it indicates that a size of the occupancy of the L3 cache attributable to the first application has small impact on the launch time of the first application. Even if the occupancy of the L3 cache attributable to the first application is relatively large, launch duration of the first application is not shortened or experiences a relatively low shortening degree.

In the embodiments of this application, after the first application is launched, the mobile phone triggers a shared-resource allocation mechanism, that is, allocates the L3 cache of a specified size to the first application, so as to avoid an excessively long launch time of the first application. Before the first application is fully launched, the mobile phone cannot measure the launch time of the first application. Therefore, the mobile phone may represent the launch duration of the first application by using a launch performance value of the first application. For example, a higher launch performance value of the first application indicates a shorter launch time of the first application, and a lower launch performance value of the first application indicates a longer launch time of the first application.

Correspondingly, the mobile phone may determine, by using the launch performance value of the first application, whether the launch time of the first application is related to the occupancy of the L3 cache attributable to the first application, that is, determine the type of the first application, thereby implementing detection (namely, determining) on the type of the first application. For example, for each of a plurality of first preset occupancies, the mobile phone may set the occupancy of the L3 cache attributable to the first application to the first preset occupancy. Subsequently, the mobile phone may obtain a launch performance value (for example, obtained by a performance monitoring unit in a CPU) of the first application, so as to obtain a launch performance value of the first application that corresponds to the first preset occupancy. Then, the mobile phone may compare the launch performance value of the first application that corresponds to each first preset occupancy, for example, separately calculate a difference between a launch performance value of the first application that corresponds to a minimum first preset occupancy and a launch performance value of the first application that corresponds to another first preset occupancy. If the difference is relatively small (that is, less than or equal to a first preset difference), it indicates that increasing the occupancy of the L3 cache attributable to the first application has relatively small impact on the launch performance value of the first application, that is, has relatively small impact on the launch time of the first application. Therefore, the mobile phone can determine that the type of the first application is the non-sensitive type.

If there is a relatively large difference (that is, there is a difference greater than the first preset difference), it indicates that increasing the occupancy of the L3 cache attributable to the first application can improve launch performance of the first application, thereby shortening the launch time of the first application. The launch time of the first application is sensitive to the occupancy of the L3 cache. Therefore, the mobile phone can determine that the type of the first application is the sensitive type.

For example, the first preset occupancy may include 0% and 100%. The mobile phone may first set the occupancy of the L3 cache attributable to the first application to 0, that is, does not allocate the L3 cache to the first application. The mobile phone determines that the launch performance value of the first application in this case is a launch performance value 1. Then, the mobile phone may increase the occupancy of the L3 cache attributable to the first application to 100%, that is, allocate all the L3 cache to the first application. The mobile phone determines that the launch performance value of the first application in this case is a launch performance value 2. Then, the mobile phone may compare the launch performance value 1 with the launch performance value 2. If a difference between the launch performance value 2 and the launch performance value 1 is less than or equal to the first preset difference, it indicates that increasing the occupancy of the L3 cache attributable to the first application has no impact on the launch performance of the first application. Therefore, the mobile phone can determine that the type of the first application is the non-sensitive type. If the difference between the launch performance value 2 and the launch performance value 1 is greater than the first preset difference, it indicates that increasing the occupancy of the L3 cache attributable to the first application has impact on the launch performance of the first application, the mobile phone can determine that the type of the first application is the sensitive type, thereby quickly determining the type of the first application.

It should be noted that determining the type of the first application by using 0% and 100% is merely an example. The first preset occupancy may alternatively be set to other values, provided that there is a relatively large difference between the specified first preset occupancies of the L3 cache attributable to the first application. In addition, determining the type of the first application by using the two first preset occupancies is merely an example, and a quantity of first preset occupancies required for determining the type of the first application may alternatively be another quantity. For example, the mobile phone determines the type of the first application by using three first preset occupancies. For example, the three first preset occupancies are respectively 0%, 50%, and 100%. The mobile phone determines the following: When the occupancy of the L3 cache attributable to the first application is 0%, the launch performance value of the first application is a launch performance value 1. When the occupancy of the L3 cache attributable to the first application is 100%, the launch performance value of the first application is a launch performance value 2. When the occupancy of the L3 cache attributable to the first application is 50%, the launch performance value of the first application is a launch performance value 3. The mobile phone may calculate a difference between the launch performance value 2 and the launch performance value 1, and calculate a difference between the launch performance value 3 and the launch performance value 1. When the difference between the launch performance value 2 and the launch performance value 1 is greater than the first preset difference, or the difference between the launch performance value 3 and the launch performance value 1 is greater than the first preset difference, the mobile phone can determine that the type of the first application is the sensitive type. When the difference between the launch performance value 2 and the launch performance value 1 is less than or equal to the first preset difference, and the difference between the launch performance value 3 and the launch performance value 1 is less than or equal to the first preset difference, the mobile phone can determine that the type of the first application is the non-sensitive type.

In some embodiments, the mobile phone not only can detect the type of the first application by using a launch performance value as described above, but also can determine the type of the first application by using a preset white list. The preset white list includes an identifier of at least one application, and each of the at least one application is an application of a preset type. The mobile phone determines whether an identifier of the first application exists in the preset white list. When the identifier of the first application exists in the preset white list, the mobile phone can determine that the type of the first application is the sensitive type (or referred to as the preset type). When the identifier of the first application does not exist in the preset white list, the mobile phone can determine that the type of the first application is the non-sensitive type, thereby quickly determining the type of the first application.

Alternatively, the mobile phone can determine the type of the first application by determining whether a preset mark exists for the first application. When a corresponding preset mark exists for the first application, the mobile phone can determine that the type of the first application is the sensitive type. When no corresponding preset mark exists for the first application, the mobile phone can determine that the type of the first application is the non-sensitive type.

Optionally, a type of an application may change, and is not always unchanged. Therefore, when the identifier of the first application exists in the preset white list, or when no corresponding preset mark exists for the first application, the mobile phone may further detect the type of the first application by using a launch performance value, so as to accurately determine the type of the first application.

In the embodiments of this application, the sensitive type may also be referred to as the preset type, and the non-sensitive type may also be referred to as a non-preset type.

In the embodiments of this application, the mobile phone can determine the type of the first application (for example, determine the type of the first application by using the launch performance value of the first application according to the solution described above) each time the first application is launched, so as to accurately determine the type of the first application. Alternatively, when launching the first application for the first time, the mobile phone can determine the type of the first application by using the launch performance value of the first application, and store the identifier of the first application in the preset white list, or set a corresponding preset mark for the first application, so that a corresponding preset mark (for example, 1 or another character) exists for the first application. Then, when launching the first application, the mobile phone can directly obtain the type of the first application by using the preset white list or the preset mark, and does not need to re-determine the type of the first application each time the type of the first application is launched, thereby quickly determining the type of the first application.

Optionally, the mobile phone may periodically update the identifier of the application in the preset white list. For example, the mobile phone may detect, every first preset time, a type of an application currently being launched. When the type of the application is the sensitive type, an identifier of the application may be added to the preset white list. In addition, when the type of the application is the non-sensitive type, if the identifier of the application exists in the preset white list, the mobile phone may delete the identifier of the application from the preset white list.

Alternatively, after receiving a launch operation specific to the first application, the mobile phone may determine whether a time difference between a current time point and a time point of previous detection on the type of the application is greater than a preset time difference. If the time difference is greater than the preset time difference, it indicates that the type of the first application has not been detected for a relatively long time, and the type of the first application may have changed. Therefore, the mobile phone may detect the type of the first application. When the type of the first application is the sensitive type, the identifier of the first application may be added to the preset white list. When the type of the first application is the non-sensitive type, if the identifier of the first application exists in the preset white list, the mobile phone may delete the identifier of the first application from the preset white list.

Similarly, the mobile phone may also periodically update a preset mark corresponding to an application. For an update process of the preset mark, refer to the update process of the preset white list.

In some other embodiments, the mobile phone may not need to determine the type of the first application in the foregoing manner. The type of the first application may be directly measured by a developer of the first application and written into an installation file, so that the mobile phone can directly obtain the type of the first application after the first application is installed.

S304: When the type of the first application is a sensitive type, the mobile phone determines a degree of sensitivity of a launch performance value of the first application to an occupancy of an L3 cache.

S305: The mobile phone determines a target occupancy of the L3 cache attributable to the first application based on the degree of sensitivity of the launch performance value of the first application to the occupancy of the L3 cache.

The target occupancy represents an occupancy of the L3 cache attributable to the first application when the launch performance value is largest. As the launch performance value represents the launch time, the target occupancy represents a minimum occupancy of the L3 cache attributable to the first application in a case that the launch time is shortest. Optionally, the target occupancy may represent a minimum occupancy of the L3 cache attributable to the first application in a case that the launch performance value is largest.

In the embodiments of this application, when the type of the first application is the sensitive type, it indicates that the occupancy of the L3 cache attributable to the first application has impact on the launch time of the first application. Therefore, the mobile phone may determine the degree of sensitivity of the launch performance value of the first application to the occupancy of the L3 cache. The degree of sensitivity indicates a mapping relationship between the launch performance value (that is, the launch time) of the first application and the occupancy of the L3 cache attributable to the first application (briefly described as a mapping relationship between the launch performance value of the first application and the occupancy of the L3 cache), and the mapping relationship may reflect a launch performance value of the first application in a case that the occupancy of the L3 cache attributable to the first application is a specific value. Then, the mobile phone may determine, by using the mapping relationship between the launch performance value of the first application and the occupancy of the L3 cache, the minimum occupancy of the L3 cache in a case that the launch performance value of the first application is largest, that is, obtain the target occupancy of the L3 cache corresponding to the first application. In other words, when the occupancy of the L3 cache attributable to the first application is the target occupancy, the launch performance value of the first application is largest, and the launch duration is shortest, so as to accurately determine an amount of the L3 cache that needs to be exclusively occupied by the first application.

In some embodiments, the foregoing launch performance value may be represented by an execution speed of the first application on a processor, for example, measured by using an instructions per cycle (instructions per cycles, IPC). A higher IPC of the first application indicates a shorter launch time of the first application, and a lower IPC of the first application indicates a longer launch time of the first application.

In some embodiments, the degree of sensitivity of the launch performance value of the first application to the occupancy of the L3 cache, namely, the mapping relationship between the launch performance value of the first application and the occupancy of the L3 cache may be represented by using a curve. The following describes in detail a drawing process of the curve.

For each of a plurality of second preset occupancies, the mobile phone may set the occupancy of the L3 cache attributable to the first application to the second preset occupancy. Subsequently, the mobile phone may obtain a launch performance value of the first application, so as to obtain a launch performance value of the first application that corresponds to the second preset occupancy. Then, the mobile phone may draw a mapping curve (or referred to as a sensitivity curve) based on different second preset occupancies and a launch performance value of the first application that corresponds to each second preset occupancy (or referred to as a launch performance value corresponding to a second preset occupancy). The mapping curve represents a degree of sensitivity of the launch performance value of the first application to the occupancy of the L3 cache, where a horizontal coordinate of the mapping curve may be an occupancy, and a vertical coordinate thereof may be a launch performance value.

It should be noted that in this step, for a process of setting an occupancy and obtaining a launch performance value and for setting a first occupancy and obtaining a launch performance value corresponding to the first occupancy described above, refer to the following related descriptions.

For example, the foregoing launch performance value is an IPC. The plurality of second preset occupancies are respectively 0%, 50%, 90%, and 100%. The mobile phone first allocates 0% of the L3 cache to the first application, that is, the occupancy of the L3 cache attributable to the first application is 0%. The mobile phone learns that the IPC of the first application is IPC1 when the preset occupancy attributable to the first application is 0%. Then, the mobile phone may increase the occupancy of the L3 cache attributable to the first application by allocating 50% of the L3 cache to the first application. The mobile phone learns that the IPC of the first application is IPC2 when the second preset occupancy is 50%. Then, the mobile phone keeps increasing the occupancy of the L3 cache attributable to the first application by allocating 90% of the L3 cache to the first application. The mobile phone learns that the IPC of the first application is IPC3 when the second preset occupancy is 90%. Then, the mobile phone may keep increasing the occupancy of the L3 cache attributable to the first application by allocating 100% of the L3 cache to the first application. The mobile phone learns that the IPC of the first application is IPC4 when the second preset occupancy is 100%. Subsequently, the mobile phone may use (0%, IPC1), (50%, IPC2), (90%, IPC3), and (100%, IPC4) as coordinate points to draw the mapping curve.

Optionally, a process in which the mobile phone obtains the foregoing IPCs (such as IPC1, IPC2, IPC3, and IPC4) may include: The mobile phone may obtain a quantity of instructions that correspond to the first application and that are executed by the mobile phone in preset duration, to obtain a total quantity of instructions. Then, the mobile phone may calculate a ratio of the total quantity of instructions to a quantity of clock cycles included in the preset duration to obtain the IPC. For example, the mobile phone calculates the foregoing IPC3, and the preset duration is 100 ms. The mobile phone obtains a quantity of instructions that are related to the launch of the first application and that are executed by the mobile phone within 100 ms, to obtain a total quantity of instructions. One clock cycle is 10 ms. In this case, 100 ms includes 10 clock cycles. Therefore, IPC3 = total quantity a of instructions/10. It should be understood that specific values of the preset duration and the clock cycle herein are merely examples, and the clock cycle of 10 ms is merely an example for ease of description. Actually, the clock cycle is far less than 10 ms. The clock cycle is related to an actual CPU in the mobile phone. Different CPUs may correspond to different clock cycles, and the preset duration may also be set based on an actual situation. This application sets no limitation thereto.

The foregoing total quantity of instructions may be monitored by a performance monitoring unit (PMU) in a CPU, and the PMU is configured to measure and record performance indicators of the processor.

It can be understood that if the second preset occupancies and the first preset occupancies have a same value, for example, both include the occupancies of 0% and 100%, when the mobile phone needs to determine the mapping curve, the mobile phone may directly use the IPC value corresponding to 0% and the IPC value corresponding to 100%0% that are determined for determining the type of the first application, and does not need to repeatedly set the L3 cache in order to determine the IPC value corresponding to 0% and the IPC value corresponding to 100%, thereby increasing a drawing speed of the mapping curve.

In some embodiments, after obtaining the mapping curve, the mobile phone may determine, based on the mapping curve, the occupancy of the L3 cache attributable to the first application in a case that the IPC is highest, and determine the target occupancy based on the occupancy of the L3 cache attributable to the first application in the case that the IPC is highest. For example, if a plurality of occupancies of the L3 cache attributable to the first application in a case that the IPC is highest are determined based on the mapping curve, the minimum occupancy of the L3 cache may be determined as the target occupancy. For another example, if there is only one occupancy of the L3 cache attributable to the first application in the case that the IPC is highest, this occupancy is directly determined as the target occupancy.

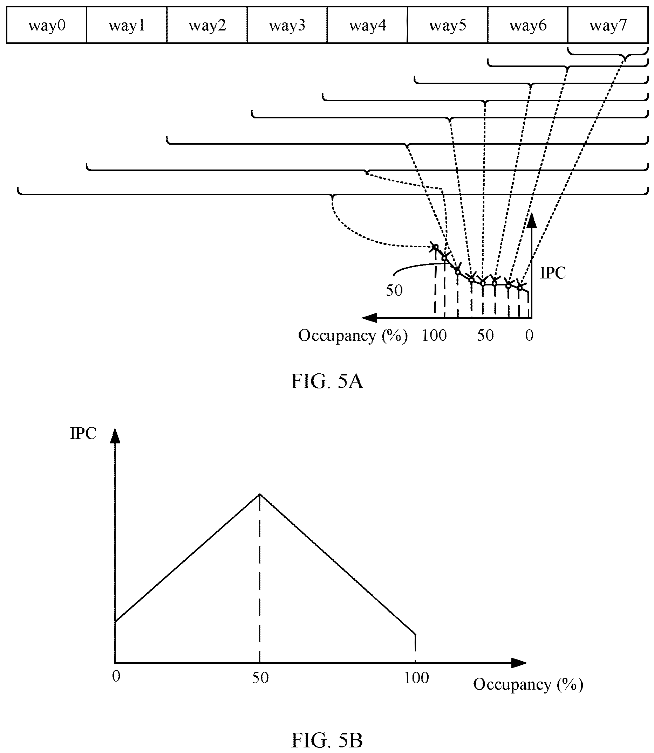

The L3 cache uses a way as a granularity of partitioning, in other words, the L3 cache includes a plurality of ways. Each of the plurality of ways may be configured to store data. As shown in FIG. 5A, the L3 cache is divided into eight parts, that is, includes eight ways. The mobile phone separately determines the IPC of the first application in a case that the occupancy of the L3 cache attributable to the first application is one way, that is, the occupancy is 12.5%; the IPC of the first application in a case that the occupancy of the L3 cache attributable to the first application is two ways, that is, the occupancy is 25%; the IPC of the first application in a case that the occupancy of the L3 cache attributable to the first application is three ways, that is, the occupancy is 37.5%; and by analogy, the IPC of the first application on the mobile phone in a case that the occupancy of the L3 cache attributable to the first application is eight ways, that is, the occupancy is 100%. The mobile phone may determine a mapping curve (a mapping curve 50 shown in FIG. 5A) between the IPC of the first application and the occupancy of the L3 cache by using the IPC of the first application in the case that the occupancy of the L3 cache attributable to the first application is one way, the IPC of the first application in the case that the occupancy of the L3 cache attributable to the first application is two ways, ..., and the IPC of the first application on the mobile phone in the case that the occupancy of the L3 cache attributable to the first application is eight ways.

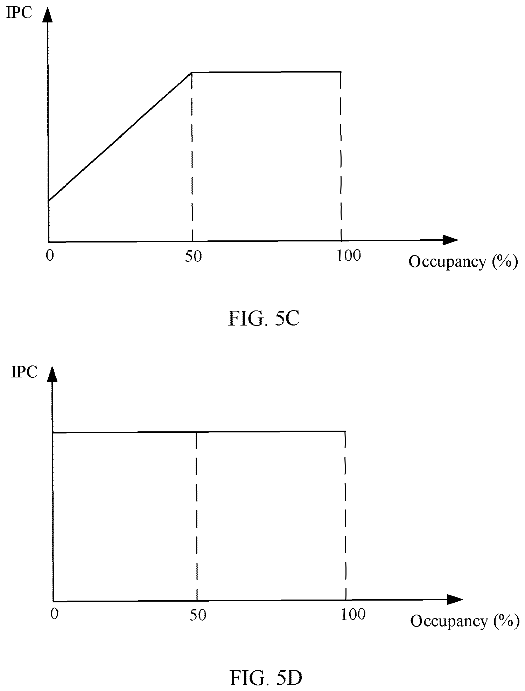

Based on the mapping curve shown in FIG. 5A, the mobile phone may determine that the IPC of the first application is highest in the case that the occupancy of the L3 cache attributable to the first application is 100%. In this case, the target occupancy may be 100%. For another example, the mobile phone obtains a mapping curve shown in FIG. 5B. The mobile phone may determine that an IPC size is in an increasing state when the occupancy of the L3 cache attributable to the first application is less than or equal to 50%. After the IPC size exceeds 50%, the IPC decreases even though the occupancy of the L3 cache attributable to the first application increases. In other words, a coordinate point corresponding to 50% is an inflection point. The mobile phone may determine that the IPC is highest when the occupancy of the L3 cache attributable to the first application is 50%. Correspondingly, the target occupancy is 50%. For another example, the mobile phone obtains a mapping curve shown in FIG. 5C. The mobile phone may determine that an IPC size is in an increasing state when the occupancy of the L3 cache attributable to the first application is less than or equal to 50%. After the IPC size exceeds 50%, the IPC remains unchanged even though the occupancy of the L3 cache attributable to the first application increases. In other words, after the occupancy of the L3 cache attributable to the first application exceeds 50%, even though the occupancy of the L3 cache attributable to the first application keeps increasing, the launch performance of the first application may not be improved, and the launch time of the first application may not keep being shortened. Therefore, the mobile phone does not need to keep increasing the occupancy of the L3 cache attributable to the first application. Correspondingly, the target occupancy is 50%.

It should be noted that, for the foregoing non-sensitive type, it may be considered that the mapping curve corresponding to the first application is of a linear type with a slope equal to or near 0 (as shown in FIG. 5D). The IPC is basically unchanged even if the L3 cache allocated to the first application is changed. For the foregoing sensitive type, it may be considered that the mapping curve corresponding to the first application is curvilinear (as in FIG. 5A, FIG. 5B, or FIG. 5C). When the L3 cache allocated to the first application is changed, the IPC changes accordingly. In other words, at least a part of a mapping curve corresponding to an application of the sensitive type meets a relationship in which a launch performance value (or described as a launch time) of the application changes with an occupancy of the L3 cache attributable to the application.

In addition, a shape of the mapping curve shown in FIG. 5A, FIG. 5B, or FIG. 5C is merely an example, and a shape of the mapping curve corresponding to the first application may be another shape. This application sets no limitation thereto. Alternatively, the mapping relationship between the occupancy of the L3 cache attributable to the first application and the launch performance value of the first application may not be represented by using the mapping curve, but may be represented in another form, for example, by using a file. This file (for example, a table) may include the occupancy of the L3 cache attributable to the first application and the launch performance value of the first application that corresponds to the occupancy of the L3 cache attributable to the first application. In other words, the mobile phone may determine the target occupancy by using the mapping relationship corresponding to the first application.

In some embodiments, the launch performance value may also be represented by an L3 cache hit rate. A higher L3 cache hit rate indicates a higher success rate of obtaining, by the mobile phone from the L3 cache, the data required for launching the first application, a smaller quantity of times that the mobile phone needs to access the main memory, and a shorter launch time of the first application. A lower L3 cache hit rate indicates a longer launch time of the first application. The mobile phone may determine the mapping curve by using the L3 cache hit rate. A determining process of the mapping curve is similar to a process in which the mobile phone determines the mapping curve by using the IPC, and details are not described herein again.

Optionally, the L3 cache hit rate may be directly obtained by the mobile phone. Alternatively, the L3 cache hit rate may be determined by using an L3 cache miss rate (that is, missing rate). For example, the mobile phone may determine the L3 cache miss rate in a case that the occupancy of the L3 cache attributable to the first application is a specific occupancy. Then, the mobile phone may subtract the L3 cache miss rate from 1 to obtain the L3 cache hit rate by means of calculation. The L3 cache hit rate or the L3 cache miss rate is a performance indicator that the mobile phone can monitor. For example, a performance monitoring unit in a CPU can monitor the L3 cache hit rate or the L3 cache miss rate.

In some embodiments, after determining the target occupancy of the L3 cache attributable to the first application, the mobile phone may allocate a remainder of the L3 cache to an application (or referred to as another application herein) running on the mobile phone other than the first application in a launching state, that is, determine an occupancy of the L3 cache attributable to the another application. For example, when a type of the processor is a first type, it indicates that a sum of an occupancy of the L3 cache attributable to a foreground application and an occupancy of the L3 cache attributable to a non-foreground application needs to be 100%. In this case, the occupancy of the L3 cache attributable to the non-foreground application may be 1 - the target occupancy. When a type of the processor is a second type, it indicates that a sum of an occupancy of the L3 cache attributable to a foreground application and an occupancy of the L3 cache attributable to a non-foreground application may not be 100%, and may be greater than 100%. The occupancy of the L3 cache attributable to the foreground application is 100% at most, and the occupancy of the L3 cache attributable to the non-foreground application is 10% at most. Therefore, when the target occupancy is less than 90%, the mobile phone can determine that the occupancy of the L3 cache attributable to the non-foreground application is 1 - the target occupancy. When the target occupancy is 100%, the mobile phone can determine that the occupancy of the L3 cache attributable to the non-foreground application is 10%. It should be understood that when the sum of the occupancy of the L3 cache attributable to the foreground application and the occupancy of the L3 cache attributable to the non-foreground application is greater than 100%, it means that the L3 cache allocated to the foreground application overlaps the L3 cache allocated to the non-foreground application.

For example, applications running on the mobile phone may be divided into a plurality of application groups, such as a foreground application group (foreground) and a non-foreground application group. The non-foreground application group may include a background application group (background) and a system application group (system). The system application group may include system applications. The system applications are applications pre-installed in an operating system of the mobile phone. These applications have higher privileges, can access system resources and execute system-level tasks, and support normal running of the mobile phone.

The background application group may include a background application running on the mobile phone, and the background application is an application that is switched from foreground running to background running, that is, switched from a foreground application to a background application (for example, the short video application shown in FIG. 1E).

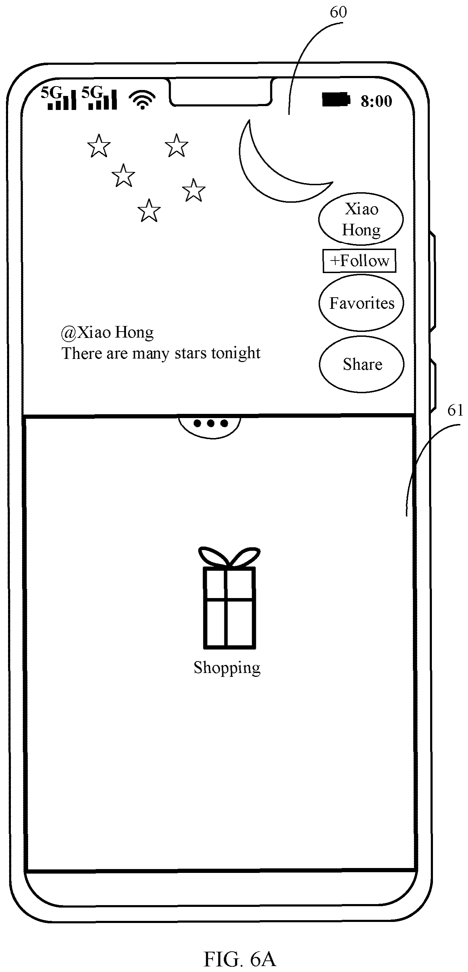

Optionally, the application groups may further include a focus application (top-APP) group, and the focus application group includes a focus application running on the mobile phone. The focus application is an APP that is currently interacting with a user. The first application may be a focus application, or may not be a focus application but only a foreground application. In other words, a focus application and a foreground application may be the same or different. In one case, the mobile phone currently displays only an interface of the first application. In this case, a foreground application may include only the first application, and the first application is a focus application. In another case, the mobile phone enables a multi-window service, and the mobile phone can run a plurality of foreground applications at the same time. A foreground application currently interacting with a user may be referred to as a top-APP. For example, as shown in FIG. 6A, the mobile phone simultaneously displays an interface 60 of a short video APP and an interface 61 of a shopping APP, where the interface 61 of the shopping APP displays launch content, indicating that the shopping APP is being launched, and the shopping APP is the first application above. A window of the shopping APP is in a highlighted display state (or referred to as a selected state), and the shopping APP is a focus application, that is, a top-APP. It should be understood that the split-screen scenario shown in FIG. 6A is merely an example in which the mobile phone runs a plurality of foreground applications at the same time. The mobile phone may run a plurality of foreground applications at the same time in another scenario, for example, a floating window scenario. To be specific, an interface of one application may be displayed in a full-screen manner, and an interface of at least one of other applications is displayed by using a floating window. The first application may be an application displayed in the full-screen manner, or may be an application displayed by using a floating window.

It should be noted that the first application is a foreground application in the launching state, and may belong to the foreground application group or the focus application group.

The foregoing briefly describes how the mobile phone allocates the L3 cache to different application groups on the mobile phone. For a specific allocation process, refer to the following related descriptions.

In some embodiments, the mobile phone may determine a sensitivity curve corresponding to the first application each time the first application is launched, so as to improve accuracy of determining the sensitivity curve. Alternatively, the mobile phone may determine a sensitivity curve corresponding to the first application when launching the first application for the first time, and store the sensitivity curve corresponding to the first application. Then, the mobile phone can directly obtain the sensitivity curve corresponding to the first application each time the mobile phone launches the first application, and does not need to re-determine the sensitivity curve corresponding to the first application each time the first application is launched, thereby quickly determining the sensitivity curve corresponding to the first application and reducing resource consumption of the mobile phone without causing additional overheads.

S306: The mobile phone sets a target register based on the target occupancy of the L3 cache attributable to the first application, and allocates the L3 cache of a corresponding size to the first application.

The target register is configured to manage a size of the L3 cache accessible by the first application, that is, a size of the L3 cache allocated to the first application, that is, a quantity of partitions (or referred to as a quantity of ways).

In the embodiments of this application, the target register includes a flag bit corresponding to each way in the L3 cache. A flag bit corresponding to a way is used by the mobile phone to determine whether the way is accessible when the first application is launched, that is, determine whether only the first application can access the way. The flag bit may include an identifier 1 (for example, 0) and an identifier 2 (for example, 1). When the flag bit is the identifier 1 (for example, 0), it indicates that the way is not allowed to be accessed by the first application. When the flag bit is the identifier 2 (for example, 1), it indicates that the way is allowed to be accessed by the first application and is not allowed to be accessed by another application.

Therefore, the mobile phone may calculate a product of multiplying the target occupancy of the L3 cache attributable to the first application by a total quantity of ways in the L3 cache to obtain a quantity of ways in the L3 cache that are allowed to be accessed by the first application. For example, the quantity is referred to as a target quantity. Then, the mobile phone may set flag bits corresponding to the target quantity of ways in the target register to the identifier 2, so that the occupancy of the L3 cache attributable to the first application is the target occupancy.

For example, the identifier 2 is 1, and the L3 cache is divided into 10 parts, which are respectively way0-way9. The target occupancy is 50%. The mobile phone may set one half of way0-way9 to 1. For example, the mobile phone may set flag bits corresponding to way0-way4 to 1, and set flag bits corresponding to the other ways to 0. Then, the mobile phone may access the launch data of the first application from way0-way4, so as to allocate the L3 cache of a fixed size to the first application, thereby effectively shortening the launch time of the first application.

In some embodiments, the target register represents a register related to MPAM characteristics. For example, the target register is an MPAM_PARTITION_REG register.

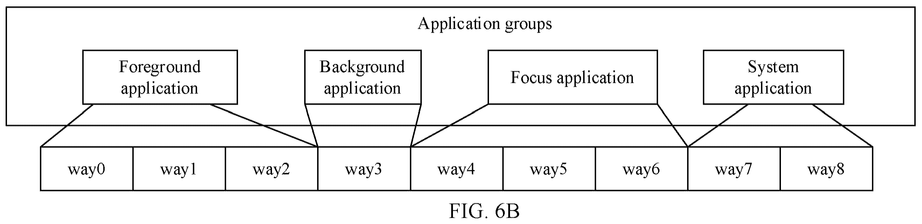

In some embodiments, the mobile phone may also allocate a remainder of the L3 cache to an application in another application group, where the another application group is an application group other than an application group to which the first application belongs. For example, the application groups on the mobile phone may include the foreground application group, the focus application group, the background application group, and the system application group. A focus application in the focus application group is not in a launching stage, and a foreground application in the foreground application group is in the launching stage. The foreground application in the foreground application group is the first application, and the application group to which the first application belongs is the foreground application group. After determining the target occupancy of the L3 cache attributable to the first application, the mobile phone may allocate a remainder of the L3 cache to the other application groups (that is, the focus application group, the background application group, and the system application group), or this can be understood as follows: the other application groups contend for the remainder of the L3 cache. As a focus application is an application currently interacting with the user, and smooth running of the focus application needs to be ensured, the mobile phone may allocate the L3 cache of a relatively large size to the focus application group, and an occupancy of the L3 cache attributable to another application group may be less than an occupancy of the L3 cache attributable to the focus application group. For example, as shown in FIG. 6B, the L3 cache may include nine ways, the target occupancy corresponds to three ways, and there are six remaining ways. Therefore, the mobile phone may allocate three ways to the focus application group (that is, a focus application), one way to the background application group (that is, a background application), and two ways to the system application group (that is, a system application). Certainly, the mobile phone may alternatively allocate one way to the system application group and two ways to the background application group.

In some embodiments, after the first application is fully launched, the mobile phone stops allocating a fixed L3 cache to the first application, and the first application and another application normally contend for the L3 cache, thereby preventing a running status of the another application from being affected for a long time.

In some embodiments, when the first application is in a launching stage, the mobile phone may not determine, based on whether the type of the first application is the sensitive type, whether to allocate an L3 cache of a specified size to the first application, but may directly determine the sensitivity curve corresponding to the first application when the first application is in the launching stage, so as to determine, by using the sensitivity curve corresponding to the first application, the target occupancy of the L3 cache attributable to the first application, thereby allocating the L3 cache of the specified size to the first application.

It should be understood that, the allocation of the L3 cache to the first application by using the target register is merely an example, and the L3 cache may also be allocated to the first application in another manner. This application sets no limitation thereto.

S307: The mobile phone continues launching the first application based on the L3 cache allocated to the first application.

In the embodiments of this application, the mobile phone accesses the launch data of the first application (that is, the data required for launching the first application) from the L3 cache allocated to the first application, so as to continue launching the first application. Because the occupancy of the L3 cache attributable to the first application is large enough, the L3 cache hit rate can be improved, thereby shortening the launch duration of the first application. It should be understood that data in the L3 cache is loaded by the mobile phone from the main memory.

It should be noted that the above-described allocation of the L3 cache of the corresponding size to the first application based on the target occupancy to launch the first application is merely an example, and the mobile phone may flexibly allocate an L3 cache of a specific size to the first application without being limited to allocating an L3 cache of a size corresponding to the target occupancy to the first application. As shown in FIG. 5C, the target occupancy is 50%. The mobile phone may allocate an L3 cache of a size corresponding to 50% to the first application, or allocate an L3 cache of a size corresponding to 40% to the first application, so as to implement flexible allocation of the L3 cache.

S308: When the type of the first application is a non-sensitive type, the mobile phone continues launching the first application.

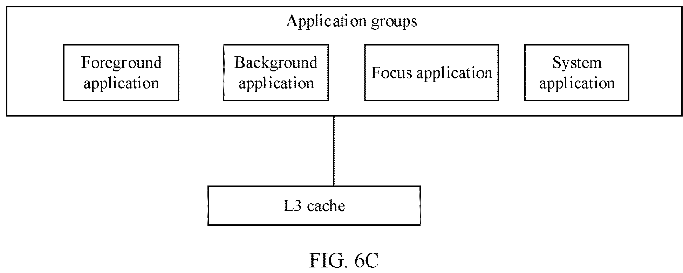

In the embodiments of this application, when the type of the first application is the non-sensitive type, it indicates that the occupancy of the L3 cache attributable to the first application has little impact on the launch time of the first application is relatively small. Even if the L3 cache allocated to the first application is increased, a shortening degree of the launch time of the first application is relatively small. Therefore, the mobile phone does not need to allocate an L3 cache of a specified size to the first application, in other words, does not need to perform S304-S306 above. Although the mobile phone can normally launch the first application and display launch content of the first application, the first application still needs to contend for the L3 cache with another application. For example, as shown in FIG. 6C, a foreground application (including the first application) needs to contend for the L3 cache with a focus application, a background application, and a system application.

It should be noted that, after the first application is fully launched, the mobile phone may release the L3 cache allocated to the first application, that is, no longer allocates an L3 cache of a fixed size to the first application.

In the embodiments of this application, the L3 cache in the mobile phone is a shared resource. Therefore, both a foreground application (the first application described above) and a non-foreground application in the mobile phone can access the L3 cache. When the first application is in the launching stage, the mobile phone may determine whether the type of the first application is the sensitive type, so as to determine whether the launch time of the first application is related to the occupancy of the L3 cache attributable to the first application. When the type of the first application is the sensitive type, it indicates that the launch time of the first application is related to the occupancy of the L3 cache attributable to the first application. However, because the launch time of the first application cannot be measured before the first application is fully launched, the mobile phone may determine the mapping relationship between the occupancy of the L3 cache attributable to the first application and the launch performance value of the first application. The launch performance value is a performance indicator that can be directly measured, and represents the launch time, so as to determine a mapping relationship between the launch time of the first application and the occupancy of the L3 cache attributable to the first application.

To ensure a relatively short launch time of the first application, the mobile phone may determine a minimum occupancy corresponding to a maximum launch performance value by using the mapping relationship, that is, determine a minimum occupancy corresponding to a shortest launch time, and use the minimum occupancy as the target occupancy. Then, the mobile phone may allocate some or all of the ways in the L3 cache to the first application by setting the flag bits corresponding to the ways in the L3 cache in the target register, so as to limit a size of the L3 cache accessible by a non-foreground application, and ensure the occupancy of the L3 cache attributable to the first application in the launching stage, thereby avoiding an excessively long launch time of the first application caused by a relatively small occupancy of the L3 cache attributable to the first application. In addition, the target occupancy of the L3 cache attributable to the first application is determined based on a degree of sensitivity of the first application to the L3 cache, thereby avoiding an excessively high or low occupancy regarding allocation to the first application.

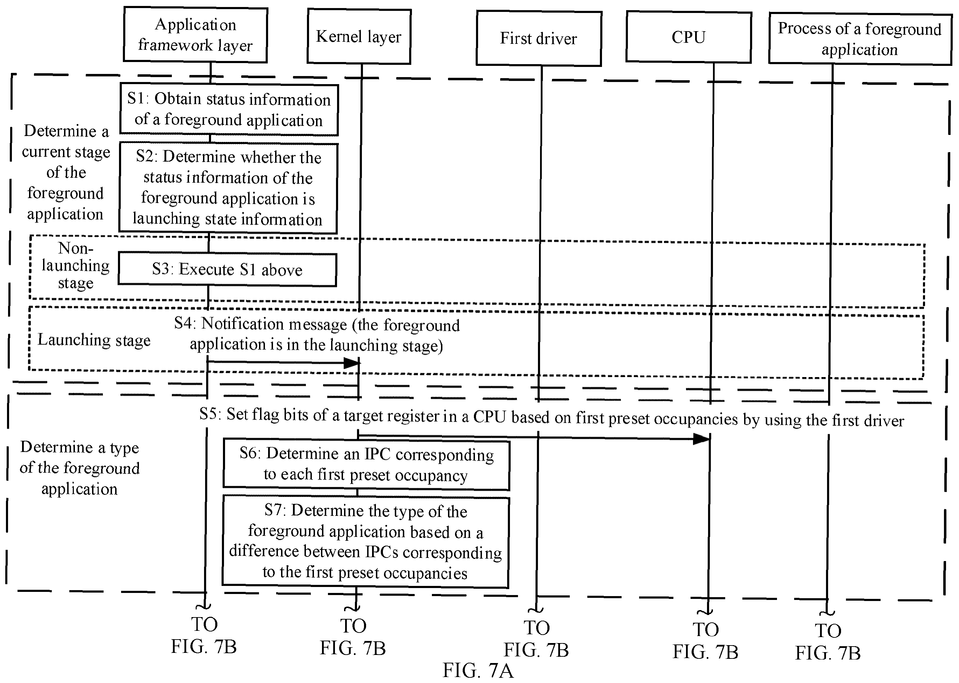

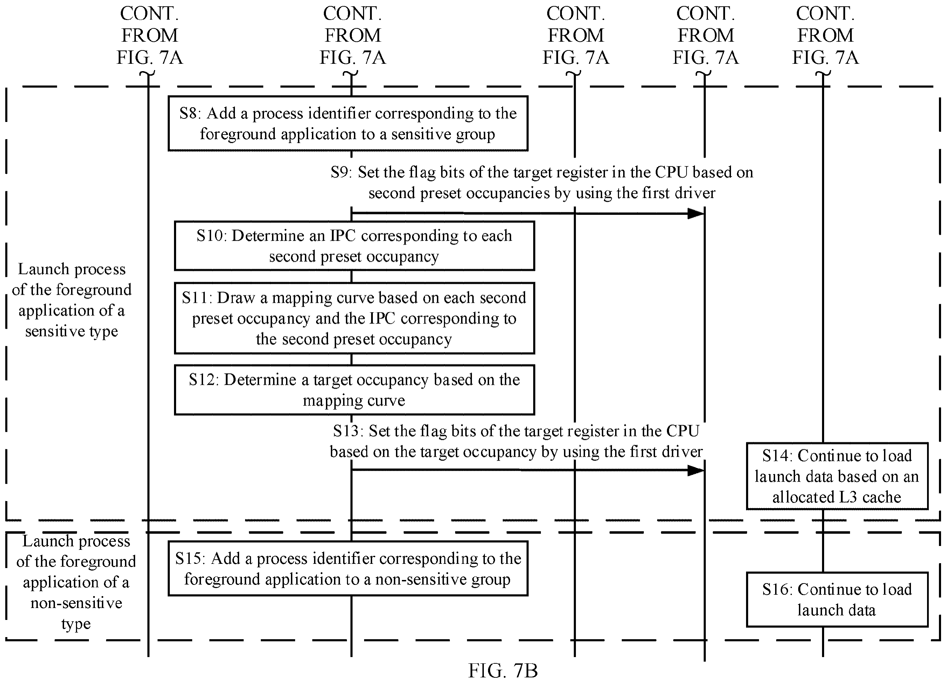

In some embodiments, the mobile phone may allocate an L3 cache of a specified size to a foreground application in a launching stage by using a related driver (for example, the first driver). The following describes, with reference to the structure shown in FIG. 3, a process in which the mobile phone allocates the L3 cache to a foreground application. The process may include S1-S16 shown in FIG. 7A and FIG. 7B. S1-S4 describe an implementation process in which the mobile phone determines a current stage of the foreground application. S5-S7 describe an implementation process in which the mobile phone determines a type of the foreground application. S8-S14 describe an implementation process in which the mobile phone launches the foreground application based on the type of the foreground application being the sensitive type. S15-S16 describe a process in which the mobile phone launches the foreground application that is not the sensitive type.

S1: The application framework layer obtains status information of the foreground application.

S2: The application framework layer determines whether the status information of the foreground application is launching state information.

In the embodiments of this application, the application framework layer obtains the status information of the foreground application periodically or in real time, where the status information indicates a current stage of the foreground application. For example, the status information may include the launching state information and non-launching state information, and the launching state information indicates that the foreground application is in a launching state, that is, is in a launching stage. The non-launching state information indicates that the foreground application is in a non-launching state, that is, is in a non-launching stage. For example, the non-launching state may include a running state and/or a paused state. After the launch is complete, the foreground application enters the running state. The paused state means that the foreground application is still visible to a user, but it cannot obtain a focus and does not respond to an operation input by the user.

After obtaining the status information of the foreground application, the application framework layer may determine whether the status information of the foreground application is the launching state information, that is, determine whether the foreground application is in the launching stage. If the foreground application is in the non-launching stage, it indicates that a shared-resource allocation mechanism does not need to be triggered, and the application framework layer may continue to obtain the status information of the foreground application, until a new foreground application is in a launching stage, that is, the application framework layer may execute S3. If the foreground application is in the launching stage, the application may execute S4 to trigger the shared-resource allocation mechanism, so as to allocate sufficient resources to the foreground application, thereby avoiding an excessively long launch time of the foreground application.

S3: The application framework layer performs S1.

S4: The application framework layer sends a notification message to the kernel layer, where the notification message indicates that the foreground application is in the launching stage.

S5: In response to the notification message, for each of a plurality of first preset occupancies, the kernel layer sets flag bits of a target register in a CPU based on the first preset occupancy by using the first driver, and allocates the L3 cache of a corresponding size to a process of the foreground application. The flag bits are used to set a quantity of ways in the L3 cache that are to be allocated to the foreground application.

In the embodiments of this application, for each first preset occupancy, the kernel layer calculates a product of the first preset occupancy multiplied by the total quantity of ways in the L3 cache to obtain a quantity corresponding to the first preset occupancy, namely, a quantity of flag bits that correspond to the ways and that need to be set to 1. Then, the mobile phone may set, to 1, the flag bits in the target register that correspond to the ways whose quantity corresponds to the first preset occupancy, so that an occupancy of the L3 cache attributable to the foreground application (to be specific, the process of the foreground application) is the first preset occupancy. Then, the kernel layer may obtain performance information (for a case that the occupancy of the L3 cache attributable to the foreground application is the first preset occupancy) of a CPU core that executes a launch task of the foreground application, that is, obtain performance information of the foreground application (or described as performance information of the foreground application that corresponds to the first preset occupancy).

For example, the performance information of the foreground application may include an IPC and/or a miss rate. The kernel layer may determine a launch performance value of the foreground application based on the performance information of the foreground application. For example, the performance information of the foreground application includes the IPC, and the kernel layer may directly use the IPC as the launch performance value. For another example, the performance information of the foreground application includes an L3 cache miss rate. A launch performance value of the foreground application may include an L3 cache hit rate, where L3 cache hit rate = 1 - L3 cache miss rate. For another example, the performance information of the foreground application includes a miss rate and an IPC. The kernel layer may use the IPC or an L3 cache hit rate as a launch performance value.

The following describes a process of determining the type of the foreground application by using an example in which the launch performance value is an IPC.

S6: The kernel layer determines an IPC corresponding to each first preset occupancy. The IPC corresponding to the first preset occupancy indicates an IPC of the foreground application in a case that the occupancy of the L3 cache attributable to the foreground application is the first preset occupancy.

S7: The kernel layer determines the type of the foreground application based on a difference between IPCs corresponding to the first preset occupancies.

In the embodiments of this application, the kernel layer may calculate a difference between IPCs corresponding to two first preset occupancies. If the difference is less than or equal to the first preset difference, it indicates that changing the occupancy of the L3 cache attributable to the foreground application causes relatively little change to launch performance of the foreground application. Therefore, the kernel layer can determine that the type of the foreground application is the non-sensitive type. If the difference is greater than the first preset difference, it indicates that changing the occupancy of the L3 cache attributable to the foreground application causes relatively great change to launch performance of the foreground application. Therefore, the kernel layer can determine that the type of the foreground application is the sensitive type.

Certainly, the kernel layer may also calculate a difference between an IPC corresponding to a maximum first preset occupancy and an IPC corresponding to a minimum first preset occupancy. If the difference is less than or equal to the first preset difference, it indicates that changing the occupancy of the L3 cache attributable to the foreground application causes relatively little change to launch performance of the foreground application. Therefore, the kernel layer can determine that the type of the foreground application is the non-sensitive type. If the difference is greater than the first preset difference, it indicates that changing the occupancy of the L3 cache attributable to the foreground application causes relatively great change to launch performance of the foreground application. Therefore, the kernel layer can determine that the type of the foreground application is the sensitive type. It should be understood that, herein, determining the type of the foreground application by using a difference between IPCs corresponding to one first preset occupancy is merely an example. Alternatively, the type of the foreground application may be determined by using a difference between IPCs corresponding to a plurality of first preset occupancies. If there may be at least three first preset occupancies, the electronic device may calculate a difference between IPCs corresponding to any two first preset occupancies. If all differences are less than or equal to the first preset difference, it can be determined that the type of the foreground application is the non-sensitive type. If there is a difference greater than the first preset difference, it can be determined that the foreground or application is of the sensitive type. Alternatively, a difference between an IPC corresponding to a minimum first preset occupancy and an IPC corresponding each of the other first preset occupancy may be separately calculated. If all differences are less than or equal to the first preset difference, it can be determined that the type of the foreground application is the non-sensitive type. If there is a difference greater than the first preset difference, it can be determined that the foreground or application is of the sensitive type.

The foregoing describes the specific process in which the kernel layer determines the type of the foreground application. The following continues to describe a process in which the mobile phone allocates a fixed L3 cache to the foreground application and launches the foreground application in a case that the type of the foreground application is the sensitive type.

S8: The kernel layer adds a process identifier corresponding to the foreground application to a sensitive group in a case that the type of the foreground application is the sensitive type.

S9: For each of a plurality of second preset occupancies, the kernel layer sets the flag bits of the target register in the CPU based on the second preset occupancy by using the first driver, and allocates the L3 cache of a corresponding size to a process corresponding to the process identifier in the sensitive group.

S10: The kernel layer determines an IPC corresponding to each second preset occupancy. The IPC corresponding to the second preset occupancy indicates an IPC of the foreground application in a case that the occupancy of the L3 cache attributable to the foreground application is the second preset occupancy.

Determining the IPC corresponding to the second preset occupancy by the kernel layer is similar to the foregoing process of determining the IPC corresponding to the first preset occupancy, and details are not described herein again.

S11: The kernel layer draws a mapping curve corresponding to the process identifier based on each second preset occupancy and the IPC corresponding to the second preset occupancy, where the mapping curve represents a mapping relationship between an occupancy of the L3 cache attributable to the foreground application and an IPC.

S12: The kernel layer determines a target occupancy corresponding to the process identifier based on the mapping curve corresponding to the process identifier, where the target occupancy represents a minimum occupancy corresponding to a highest IPC.

In the embodiments of this application, for each second preset occupancy, the kernel layer uses the second preset occupancy and the corresponding IPC as one coordinate point, so as to obtain a plurality of coordinate points. Then, the kernel layer may draw the plurality of coordinate points in a coordinate system with a horizontal axis representing an occupancy and a vertical axis representing an IPC. Subsequently, the kernel layer may fit the plurality of coordinate points in the coordinate system to obtain a mapping curve corresponding to the foreground application, that is, obtain the mapping curve corresponding to the process identifier corresponding to the process of the foreground application.

S13: The kernel layer invokes the first driver, sets the flag bits of the target register in the CPU based on the target occupancy, and allocates the L3 cache of a corresponding size to the process corresponding to the process identifier.

S14: The process corresponding to the process identifier continues to load launch data based on the allocated L3 cache.

In the embodiments of this application, the kernel layer allocates the L3 cache corresponding to the target occupancy, that is, corresponding ways in the L3 cache to the process of the foreground application. The process of the foreground application reads the launch data from the allocated L3 cache, and loads the launch data to launch the foreground application. It should be understood that reading the launch data by the process of the foreground application is actually reading the launch data from the allocated L3 cache by the CPU core that executes the launch task of the foreground application.

In some embodiments, the kernel layer may set the flag bits of the target register by invoking a driver interface (for example, an MPAM-related driver interface), and allocate the L3 cache of the corresponding size to the process corresponding to the process identifier. The first driver is

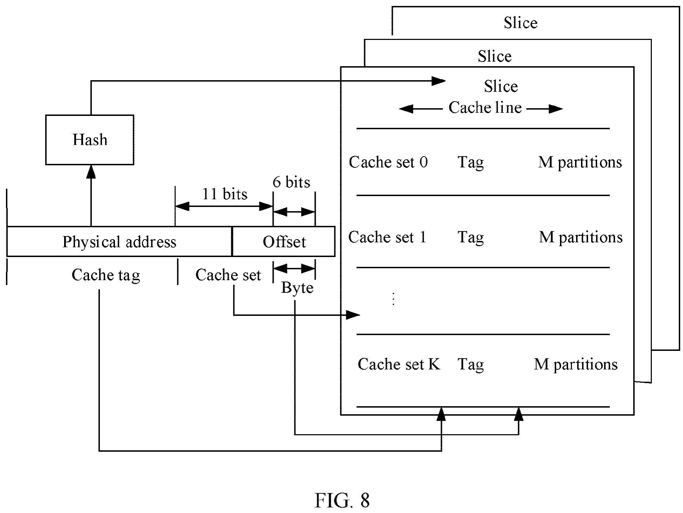

In some embodiments, as shown in FIG. 8, the L3 cache may be divided into several slices (slice), each slice includes K cache sets (cache set), and each of the K cache sets may include M partitions (way). The foregoing way is actually each way in each cache set. For example, allocating way0 to the foreground application above actually means allocating each way0 in each cache set to the foreground application. Each way may include one or more cache lines (cache line), and has its own tag (tag) to indicate a memory address of stored data. When data needs to be read from or written to the L3 cache, a corresponding way is determined based on a part (usually a tag) of the memory address, and the way is searched for a required cache line. A cache line is a minimum unit of a cache and is used to store data read from the main memory (namely, a primary memory). Generally, a size of a cache line is a power of 2, for example, 32 bytes or 64 bytes.

In addition, as shown in FIG. 8, when data needs to be read from or written to the L3 cache, the mobile phone may determine, based on a physical address and an offset, a way corresponding to the data, to implement address mapping. Specifically, a hash in FIG. 8 is used to determine a target slice that needs to be accessed, and a cache tag is used to determine a target cache set that needs to be accessed in a target slice. 11 bits are used to determine a target cache line that needs to be accessed in the target cache set, and 6 bits are used to determine data that needs to be accessed in the target cache line.

The foregoing describes the launch data of the foreground application in a case that the type of the foreground application is the sensitive type. Certainly, it is also possible that the type of the foreground application is the non-sensitive type. The following continues to describe a launch process of the foreground application in a case that the type of the foreground application is the non-sensitive type.

S15: The kernel layer adds a process identifier corresponding to the foreground application to a non-sensitive group in a case that the type of the foreground application is the non-sensitive type.

S16: The process corresponding to the process identifier continues to load launch data.

In the embodiments of this application, after determining that the type of the foreground application is the non-sensitive type, the kernel layer may add the process identifier corresponding to the process of the foreground application to the non-sensitive group, and the foreground application can normally load the launch data for launching. In other words, the process of the foreground application still needs to contend for the L3 cache with a process of another application.

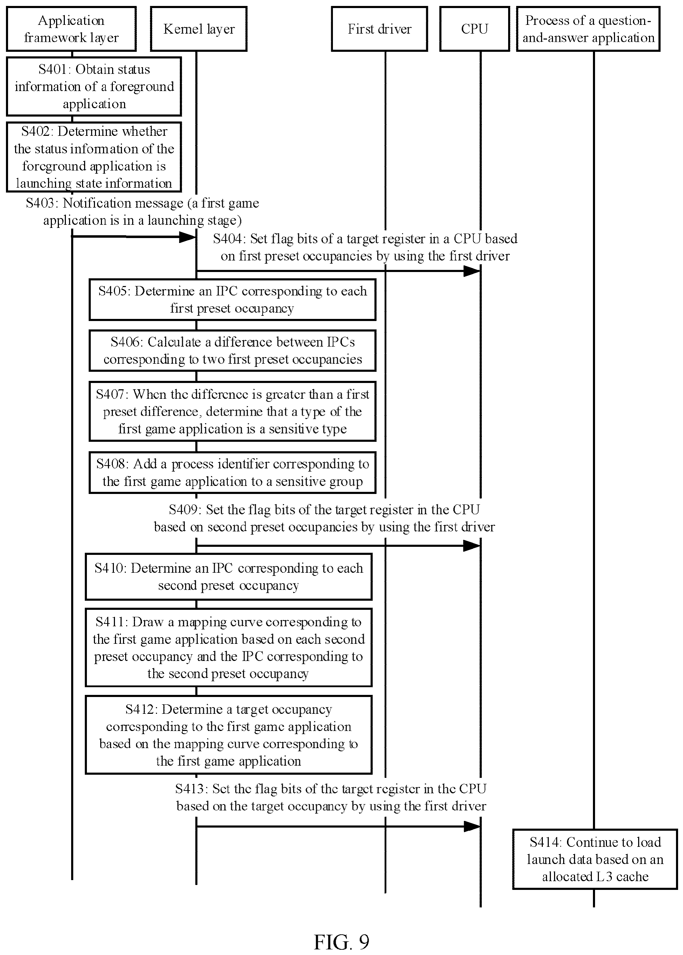

For example, an application of the sensitive type may include a short video application and/or a question-and-answer application. The following describes the implementation process of S1-S16 above with reference to FIG. 9 by using an example in which the foreground application (namely, the first application) is a question-and-answer application, in other words, describes a process in which the mobile phone allocates the L3 cache to the foreground application. FIG. 9 may include S401-S414.

S401: The application framework layer obtains status information of the foreground application.

S402: The application framework layer determines that the status information of the foreground application is launching state information.

S403: The application framework layer sends a notification message to the kernel layer, where the notification message indicates that the question-and-answer application is in a launching stage.

S404: In response to the notification message, for each of two first preset occupancies, the kernel layer sets flag bits of a target register in a CPU based on the first preset occupancy by using the first driver, and allocates the L3 cache of a corresponding size to a process of the question-and-answer application. The flag bits are used to set a quantity of partitions in the L3 cache that are to be allocated to the question-and-answer application.

For example, in response to a first operation performed by a user on the question-and-answer application, the mobile phone may launch the question-and-answer application. The application layer in the mobile phone may determine that the question-and-answer application is in the launching stage, and may send a notification message to the kernel layer, where the notification message may include information about the question-and-answer application, such as an identifier of the question-and-answer application or a process identifier corresponding to the question-and-answer application. After receiving the notification message, the kernel layer may determine, based on the notification message, that the question-and-answer application in the mobile phone is in the launching stage.

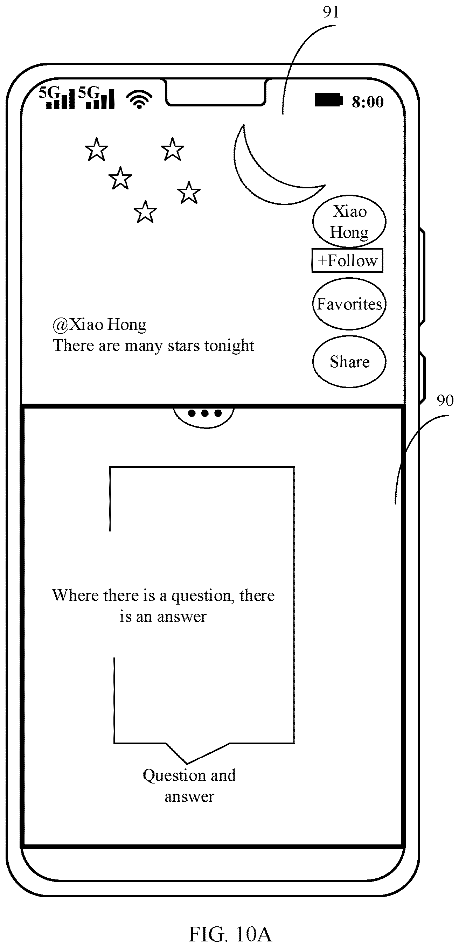

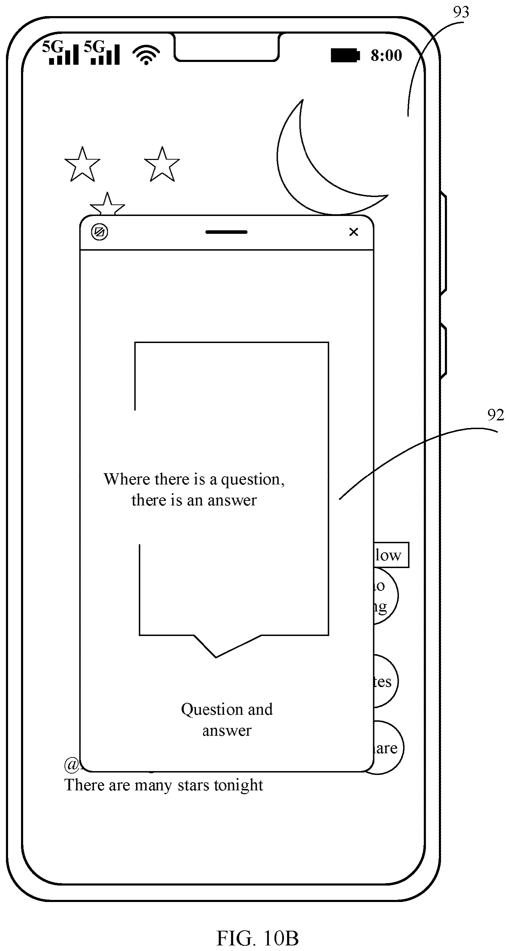

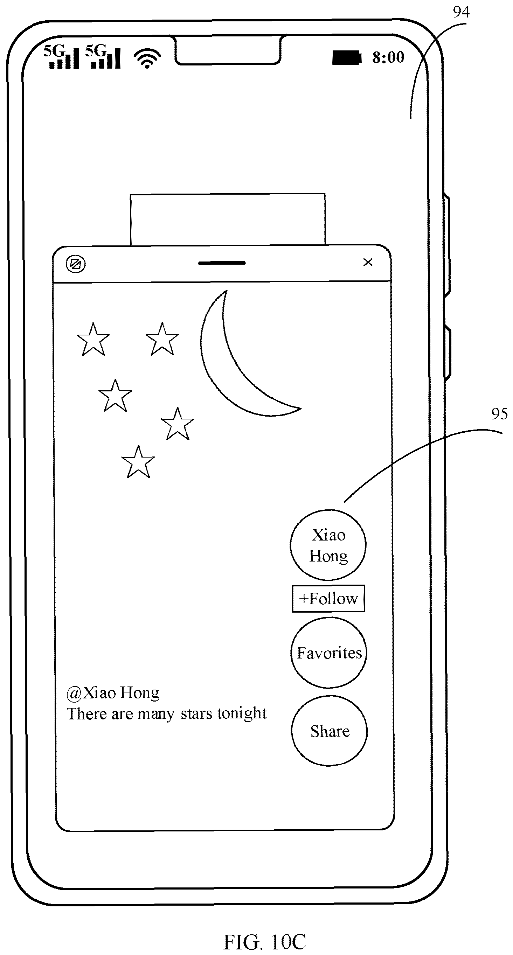

Optionally, a launching scenario of the question-and-answer application may be a multi-window scenario. The multi-window scenario indicates that a foreground of the mobile phone not only displays an interface of the question-and-answer application, but also displays an interface of another application. For example, as shown in FIG. 10A, the mobile phone displays an interface 90 of the question-and-answer application and an interface 91 of a short video application in the split-screen manner, and the launching scenario of the question-and-answer application is a multi-window scenario. For another example, as shown in FIG. 10B, the mobile phone displays an interface 92 of the question-and-answer application in a floating manner, and the interface 92 of the question-and-answer application floats over an interface 93 of the short video application. For another example, as shown in FIG. 10C, the mobile phone displays an interface 94 of the question-and-answer application in the full-screen manner, and an interface 95 of the short video application floats over the interface 94 of the question-and-answer application.

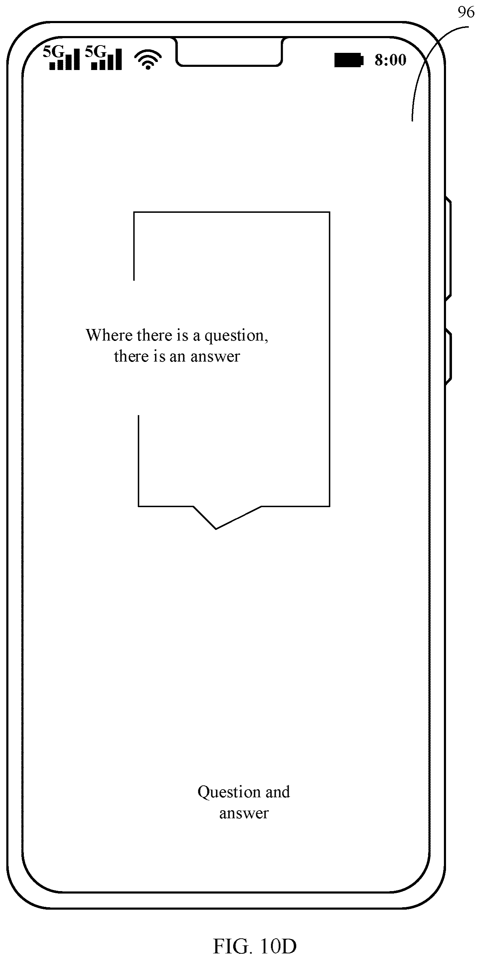

Alternatively, the launching scenario of the question-and-answer application may be a single-window scenario. The single-window scenario indicates that the foreground of the mobile phone displays only an interface of the question-and-answer application, and does not display an interface of another application at the same time. As shown in FIG. 10D, the mobile phone displays a launching interface 96 of the question-and-answer application in the full-screen manner.

In some embodiments, the notification message may not include information about the question-and-answer application, but only notifies that the foreground application is in the launching stage. Correspondingly, in response to the notification message, the kernel layer may obtain information about the foreground information in the launching stage to obtain the information about the question-and-answer application.

S405: The kernel layer determines an IPC corresponding to each first preset occupancy. The IPC corresponding to the first preset occupancy indicates an IPC of the question-and-answer application in a case that an occupancy of the L3 cache attributable to the question-and-answer application is the first preset occupancy.

S406: The kernel layer calculates a difference between IPCs corresponding to the two first preset occupancies.

S407: When the difference is greater than a first preset difference, the kernel layer determines that a type of the question-and-answer application is the sensitive type.

S408: The kernel layer adds a process identifier corresponding to the question-and-answer application to a sensitive group.

S409: For each of two second preset occupancies, the kernel layer sets the flag bits of the target register in the CPU based on the second preset occupancy by using the first driver, and allocates the L3 cache of a corresponding size to a process of the question-and-answer application corresponding to the process identifier corresponding to the question-and-answer application in the sensitive group.

In some embodiments, when the foregoing sensitive group has process identifiers corresponding to a plurality of applications whose mapping curves have not been determined, a mapping curve corresponding to a process identifier corresponding to each application whose mapping curve has not been determined in the sensitive group may be successively determined, for example, in ascending order of addition time points, or a mapping curve corresponding to an application that is most recently launched by the user is first determined in ascending order of addition time points.

Optionally, the kernel layer may determine a type of the question-and-answer application by using the sensitive group. For example, when the process identifier corresponding to the question-and-answer application already exists in the sensitive group, the kernel layer may directly determine that the question-and-answer application is of the sensitive type, and does not need to determine the type of the question-and-answer application by using the first preset occupancy. It should be understood that, when the current launch of the question-and-answer application is not the first launch, it indicates that the type of the question-and-answer application has been determined before launching. When the type of the question-and-answer application is the sensitive type, the process identifier corresponding to the question-and-answer application already exists in the sensitive group.

S410: The kernel layer determines an IPC corresponding to each second preset occupancy. The IPC corresponding to the second preset occupancy indicates an IPC of the question-and-answer application in a case that an occupancy of the L3 cache attributable to the question-and-answer application is the second preset occupancy.

S411: The kernel layer draws a mapping curve corresponding to the question-and-answer application based on each second preset occupancy and the IPC corresponding to the second preset occupancy, where the mapping curve represents a mapping relationship between an occupancy of the L3 cache attributable to the question-and-answer application and an IPC.

S412: The kernel layer determines a target occupancy corresponding to the question-and-answer application based on the mapping curve corresponding to the question-and-answer application, where the target occupancy represents a minimum occupancy corresponding to a highest IPC.

S413: The kernel layer invokes the first driver, sets the flag bits of the target register in the CPU based on the target occupancy, and allocates the L3 cache of a corresponding size to the process of the question-and-answer application.

S414: The process of the question-and-answer application continues to load launch data based on the allocated L3 cache.

In some embodiments, operations performed by the foregoing software layer (such as the application framework layer or the kernel layer) may be performed by a related module in the software layer. For example, whether the foreground application is in the launching stage may be performed by the sensing module in the application framework layer.

An embodiment of this application further provides a computer-readable storage medium. The computer storage medium includes computer instructions. When the computer instructions are run on the foregoing electronic device, the electronic device is enabled to perform the functions or steps in the foregoing method embodiments.

An embodiment of this application further provides a computer program product, including a computer program. When the computer program is run on an electronic device, the electronic device is enabled to perform the functions or steps in the foregoing method embodiments.

An embodiment of this application provides a chip. The chip is configured to execute an instruction. During running, the chip performs the technical solutions in the foregoing embodiments. The implementation principles and technical effects thereof are similar, and details are not described herein again.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer instructions are loaded and executed on a computer, all or some of procedures or functions according to the embodiments of this application are produced.

It should be understood that "embodiments" mentioned throughout the specification means that particular features, structures, or characteristics related to the embodiments are included in at least one embodiment of this application. Therefore, the embodiments throughout the specification may not necessarily refer to the same embodiment. In addition, these specific features, structures, or characteristics may be combined in one or more embodiments in any appropriate manner. It should be understood that in various embodiments of this application, sequence numbers of the foregoing processes do not mean a sequence of execution. The execution sequence of the processes should be determined based on functions and internal logic of the processes, and should not constitute any limitation on an implementation process of the embodiments of this application.

It should be further understood that in this application, "when", "if", and "in a case that" all mean that UE or a base station performs corresponding processing in an objective situation. This is not limited in time, does not require a determining action when the UE or the base station implements the processing, and does not mean that there is another limitation.

A person of ordinary skill in the art can understand that various numbers such as "first" and "second" in this application are merely used for differentiation for ease of description, are not construed as a limitation on the scope of the embodiments of this application, and are also used for indicating a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" in this specification merely describes an association relationship for describing associated objects and represents that three relationships may exist. For example, "A and/or B" may represent the following three cases: Only A exists, both A and B exist, and only B exists, where A may be singular or plural, and B may be singular or plural.

The term "at least one of" in this specification represents all or any combination of the listed items. For example, "at least one of A, B, and C" may represent the following six cases: Only A exists, only B exists, only C exists, both A and B exist, both B and C exist, and A, B, and C all exist, where A may be singular or plural, B may be singular or plural, and C may be singular or plural.

A person of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

It can be clearly understood by a person skilled in the art that for convenience and brevity of description, for specific working processes of the described system, apparatus, and unit, refer to the corresponding processes in the foregoing method embodiments. Details are not repeated herein.

In several embodiments provided in this application, it should be understood that the disclosed system, apparatus, and method may be implemented in another manner. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separated, and parts displayed as units may or may not be physical units, in other words, may be located in one place, or may be distributed on a plurality of network units. Some or all of the units may be selected based on actual requirements to achieve the objectives of the solutions in the embodiments.

In addition, the functional units in the embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the portion contributing to the conventional technology, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

For same or similar portions in the embodiments of this application, refer to these embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any person skilled in the art can readily figure out variations or replacements within the technical scope disclosed in this application, and these variations or replacements shall all fall within the protection scope of this application. Therefore, the protection scope of this application shall be subject to the protection scope of the claims. In conclusion, the foregoing descriptions are merely example embodiments of the technical solutions of this application, but are not intended to limit the protection scope of this application. Any modification, equivalent replacement, improvement, and the like made within the spirit and principles of this application shall all fall within the protection scope of this application.

## Claims

1. An application launching method, applied to an electronic device, wherein the electronic device comprises a shared cache, and the method comprises:
obtaining a first operation specific to a first application;
in response to the first operation specific to the first application, allocating storage space in the shared cache to the first application, wherein the first application is an application of a preset type;
accessing the storage space allocated to the first application to obtain launch data of the first application;
launching the first application based on the launch data of the first application;
obtaining a first operation specific to a second application;
in response to the first operation specific to the second application, accessing the shared cache to obtain launch data of the second application; and
launching the second application based on the launch data of the second application.

2. The method according to claim 1, wherein "an application of the preset type" indicates that when an occupancy of the shared cache attributable to the application is a first occupancy, a launch time of the application is a first time, or when an occupancy of the shared cache attributable to the application is a second occupancy, a launch time of the application is a second time; and the first occupancy is different from the second occupancy, and the first time is different from the second time.

3. The method according to claim 1 or 2, wherein the method further comprises: when a preset white list comprises an identifier of the first application, determining that the first application is an application of the preset type; or
if a corresponding preset mark exists for the first application, determining that the first application is an application of the preset type.

4. The method according to any one of claims 1 to 3, wherein the first application is a short video application or a question-and-answer application.

5. The method according to claim 1, wherein the accessing the shared cache to obtain launch data of the second application comprises:
preempting, from the shared cache, storage space corresponding to the second application; and
accessing the storage space corresponding to the second application to obtain the launch data of the second application.

6. An application launching method, applied to an electronic device, wherein the electronic device comprises a shared cache, and the method comprises:
obtaining a first operation specific to a first application;
in response to the first operation, allocating storage space to the first application based on a mapping relationship corresponding to the first application, wherein the first application is an application of a preset type; the mapping relationship represents a mapping relationship between an occupancy of the shared cache attributable to the first application and a launch time of the first application; and the first application is an application of the preset type;
accessing the storage space allocated to the first application to obtain launch data of the first application;
launching the first application based on the launch data of the first application.

7. The method according to claim 6, wherein "an application of the preset type" indicates that a launch time of the application is related to an occupancy of the shared cache attributable to the application.

8. The method according to claim 6 or 7, wherein the method further comprises:
allocating storage space of a corresponding size in the shared cache to the first application based on the occupancy, wherein different occupancies correspond to storage space of different sizes; and
determining, based on launch performance values of the first application that respectively correspond to storage space of different sizes, that the first application is an application of the preset type.

9. The method according to claim 8, wherein the allocating storage space of a corresponding size in the shared cache to the first application based on the occupancy comprises:
for each first preset occupancy, allocating first storage space in the shared cache to the first application based on the first preset occupancy; and
the determining, based on launch performance values of the first application that respectively correspond to storage space of different sizes, that the first application is an application of the preset type comprises:
obtaining a launch performance value corresponding to the first preset occupancy, wherein the launch performance value corresponding to the first preset occupancy represents a launch performance value of the first application in a case that the storage space in the shared cache for the first application is the first storage space corresponding to the first preset occupancy;
determining a difference between launch performance values corresponding to different first preset occupancies; and
when the difference is greater than a first preset difference, determining that the first application is an application of the preset type.

10. The method according to any one of claims 6 to 9, wherein the mapping relationship corresponding to the first application represents a mapping relationship between the occupancy of the shared cache attributable to the first application and the launch performance value of the first application; and a higher launch performance value of the first application indicates a shorter launch time of the first application; and
the method further comprises:
allocating storage space of a corresponding size in the shared cache to the first application based on the occupancy, wherein different occupancies correspond to storage space of different sizes; and
determining the mapping relationship corresponding to the first application based on storage space of different sizes and launch performance values of the first application that respectively correspond to the storage space of different sizes.

11. The method according to claim 10, wherein the mapping relationship corresponding to the first application is represented by a mapping curve;
the allocating storage space of a corresponding size in the shared cache to the first application based on the occupancy comprises:
for each second preset occupancy, allocating second storage space in the shared cache to the first application based on the second preset occupancy; and
the determining the mapping relationship corresponding to the first application based on storage space of different sizes and launch performance values of the first application that respectively correspond to the storage space of different sizes comprises:
obtaining a launch performance value corresponding to the second preset occupancy, wherein the launch performance value corresponding to the second preset occupancy represents a launch performance value of the first application in a case that the storage space in the shared cache for the first application is the second storage space corresponding to the second preset occupancy; and
determining the mapping relationship based on each second preset occupancy and a launch performance value corresponding to each second preset occupancy.

12. The method according to any one of claims 8 to 11, wherein the launch performance value comprises an instructions per cycle IPC or a hit rate; wherein
a higher IPC indicates a shorter launch time of the first application; and
the hit rate is used to indicate a probability of accessing the launch data of the first application in the shared cache, and a higher hit rate indicates a shorter launch time of the first application.

13. The method according to any one of claims 6 to 12, wherein the allocating storage space to the first application based on a mapping relationship corresponding to the first application comprises:
determining a target occupancy corresponding to the first application based on the mapping relationship corresponding to the first application, wherein the target occupancy represents an occupancy of the shared cache attributable to the first application in a case that the launch time of the first application is shortest; and
allocating target storage space in the shared cache to the first application based on the target occupancy.

14. The method according to claim 13, wherein the target occupancy represents a minimum occupancy of the shared cache attributable to the first application in a case that the launch time is shortest.

15. The method according to claim 12 or 13, wherein the shared cache comprises a plurality of partitions; and
the allocating target storage space in the shared cache to the first application based on the target occupancy comprises:
setting flag bits of a target register based on the target occupancy to allocate a corresponding quantity of partitions in the shared cache to the first application.

16. An electronic device, wherein the electronic device comprises a display, a memory, and one or more processors; the display and the memory are coupled to the processor; the display is configured to display an image generated by the processor; the memory is configured to store computer program code, and the computer program code comprises computer instructions; and the memory comprises a shared cache, and when the processor executes the computer instructions, the electronic device is enabled to perform the method according to any one of claims 1 to 15.

17. A computer-readable storage medium, comprising computer instructions, wherein when the computer instructions are run on an electronic device, the electronic device is enabled to perform the method according to any one of claims 1 to 15.
